# EUROPEAN PATENT APPLICATION

(11) **EP 4 694 017 A1**
(43) Date of publication of application: **11.02.2026**
(21) Application number: 25192720.8
(22) Date of filing: 30.07.2025
(51) Int. Cl.: H04L 5/00

(54) **METHOD FOR COMMUNICATION DEVICE HANDLING UPLINK TRANSMISSION AND USER EQUIPMENT**

(30) Priority: 31.07.2024 US 202463677417 P
(71) Applicant: Industrial Technology Research Institute, Hsinchu 310401 (TW)
(72) Inventor: Lee, Chien-Min, Taoyuan City 324 (TW); Lo, Li-Chung, Taichung City 407 (TW); Chen, Jen-Hsien, Minxiong Township, Chiayi County 621 (TW); Wang, Hung-Hsiang, Zhudong Township, Hsinchu County 310 (TW)
(74) Representative: Becker Kurig & Partner Patentanwälte mbB

(57) **Abstract**

A method for communication device handling uplink (UL) transmission and a user equipment are provided. The method includes: receiving a first channel state information (CSI) report configuration from a network, wherein the first CSI report configuration comprises at least one of an event type, a resource for a physical uplink control channel (PUCCH), or a set of reference signals; performing at least one measurement for the set of reference signals according to the first CSI report configuration; and transmitting the PUCCH if a value is greater than or equal to a first threshold and a timer does not expire, wherein the first threshold or the timer is configured by a higher layer signal.

## Description

### BACKGROUND

### Technical Field

The disclosure is directed to a method for communication device handling uplink (UL) transmission and a user equipment (UE).

### Description of Related Art

In legacy beam management procedures, the network may configure/activate frequent periodic or semi-persistent beam reporting or may trigger frequent aperiodic beam reporting to timely acquire the best/preferred beam for data/control transmissions. However, this clearly results in large UL reporting overhead and control signaling overhead. At the same time, if less frequent beam reporting is configured, the network could not always acquire the best/preferred beam as the beam reporting by the UE may be outdated, thus leading to performance degradation. Therefore, implementing the beam reporting procedure in a more efficient way is a crucial challenge.

### SUMMARY

The disclosure is directed to a method for communication device handling UL transmission and a UE using the same method. The disclosure may configure UL transmissions and leaving conditions for the UE.

The present disclosure is directed to a method for communication device handling uplink (UL) transmission, including: receiving a first channel state information (CSI) report configuration from a network, wherein the first CSI report configuration includes at least one of an event type, a resource for a physical uplink control channel (PUCCH), or a set of reference signals; performing at least one measurement for the set of reference signals according to the first CSI report configuration; and transmitting the PUCCH if a value is greater than or equal to a first threshold and a timer does not expire, wherein the first threshold and the timer is configured by a higher layer signal.

In one embodiment of the present disclosure, the method further includes: determining the value according to the at least one measurement.

In one embodiment of the present disclosure, the method further includes: not transmitting the PUCCH if the value is less than the first threshold.

In one embodiment of the present disclosure, the method further includes: if at least one layer 1 reference signal received power (L1-RSRP) of at least one reference signal is a second threshold greater than a L1-RSRP of a first reference signal, increasing the value, wherein the event type is set to a first event; the second threshold is configured by the higher layer signal; or the first reference signal is a reference signal corresponding to an indicated transmission configuration indicator (TCI) state, or a synchronization signal block (SSB) quasi co-located with the reference signal corresponding to the indicated TCI state.

In one embodiment of the present disclosure, the method further includes: if a layer 1 reference signal received power (L1-RSRP) of a second reference signal is less than a third threshold, increasing the value, wherein the event type is set to a second event; the third threshold is configured by the higher layer signal; or the second reference signal is a reference signal corresponding to an indicated transmission configuration indicator (TCI) state, or a synchronization signal block (SSB) quasi co-located with the reference signal corresponding to the indicated TCI state.

In one embodiment of the present disclosure, the method further includes: setting the value to zero upon receiving a first indicator, wherein the first indicator indicates a first transmission configuration indicator (TCI) state, wherein the first indicator is used to update a second TCI state of a measured reference signal; setting the value to zero upon receiving a second indicator, wherein the second indicator indicates an activation of at least one TCI state, wherein the second indicator is transmitted via a medium access control control element (MAC-CE); setting the value to zero upon a timer expires; or setting the value to zero after transmitting a UL channel.

In one embodiment of the present disclosure, the method further includes: if a first timer is not starting and at least one layer 1 reference signal received power (L1-RSRP) of at least one reference signal is a second threshold greater than a L1-RSRP of a first reference signal, starting or restarting the first timer, wherein the event type is set to a first event; the first timer or the second threshold is configured by the higher layer signal; or the first reference signal is a reference signal corresponding to an indicated transmission configuration indicator (TCI) state, or a synchronization signal block (SSB) quasi co-located with the reference signal corresponding to the indicated TCI state.

In one embodiment of the present disclosure, the method further includes: if a second timer is not starting and a layer 1 reference signal received power (L1-RSRP) of a second reference signal is less than a third threshold, starting or restarting the second timer, wherein the event type is set to a second event; the second timer or the third threshold is configured by the higher layer signal; or the second reference signal is a reference signal corresponding to an indicated transmission configuration indicator (TCI) state, or a synchronization signal block (SSB) quasi co-located with the reference signal corresponding to the indicated TCI state.

In one embodiment of the present disclosure, the PUCCH is associated with at least one second CSI report configuration, and the at least one second CSI report configuration includes at least one event type.

In one embodiment of the present disclosure, the method further includes: transmitting a UL channel, wherein the UL channel includes a measurement report to the network, wherein the UL channel is a first one of available transmission occasions after a time period from an end of the PUCCH; the UL channel and the PUCCH are transmitted via different serving cells respectively; the UL channel is associated with at least one second CSI report configuration; or the at least one second CSI report configuration includes at least one event type.

In one embodiment of the present disclosure, the UL channel is a physical uplink shared channel (PUSCH) indicated by a downlink control information (DCI) if a report transmission mode is configured to a first mode, and the UL channel is a configured grant PUSCH (CG-PUSCH) if the report transmission mode is configured to a second mode, wherein the CG-PUSCH is configured by a second higher layer signal and the second higher layer signal includes: an identity of a higher layer configuration; a time domain resource allocation; a frequency domain resource allocation; a modulation order, target code rate, or transport block size; a periodicity of the CG-PUSCH; or a time domain offset of the CG-PUSCH.

In one embodiment of the present disclosure, the UL channel includes a channel state information (CSI) report, wherein the CSI report includes at least one of a CSI report configuration identity (ID), a cell ID, an event ID, a plurality of reference signal IDs, a reference signal received power (RSRP), or at least one differential RSRP, wherein at least one of the plurality of reference signal IDs corresponds to at least one reference signal, wherein the at least one reference signal satisfies an event, wherein a payload size of the UL channel is determined according to a set of CSI report configurations associated with the PUCCH or the UL channel.

In one embodiment of the present disclosure, the method further includes: receiving a plurality of CSI report configurations including the first CSI report configuration; and transmitting the PUCCH when the plurality of CSI report configurations satisfy a plurality of event types respectively.

In one embodiment of the present disclosure, the method further includes: transmitting information to the network, wherein the information includes at least one of the following: whether to support a CSI configuration associated with a user equipment (UE) initiate report or an event-driven report; a number of CSI report configurations associated with the UE-initiated report or the event-driven report; whether to support multiple event types for the UE-initiated report or the event-driven report; whether to support a first mode for the UE-initiated report or the event-driven report, wherein a UL channel in the first mode is configured by a downlink control information (DCI); or whether to support a second mode for the UE-initiated report or the event-driven report, wherein the UL channel in the second mode is configured by a second higher layer signal.

The present disclosure is directed to a user equipment including a processor and a transceiver. The processor is coupled to the transceiver and is configured to: receive a first channel state information (CSI) report configuration from a network, wherein the first CSI report configuration includes at least one of an event type, a resource for a physical uplink control channel (PUCCH), or a set of reference signals; perform at least one measurement for the set of reference signals according to the first CSI report configuration; and transmitting the PUCCH if a value is greater than or equal to a first threshold and a timer does not expire, wherein the first threshold or the timer is configured by a higher layer signal.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a framework of UE-initiated/event-driven UL transmission based on trigger mode A according to one embodiment of the present disclosure.
FIG. 2 illustrates a framework of UE-initiated/event-driven UL transmission based on trigger mode B according to one embodiment of the present disclosure.
FIG. 3 illustrates a schematic diagram of an indicator for identifying the radio link quality according to one embodiment of the present disclosure.
FIG. 4 illustrates a schematic diagram of an indicator for identifying the radio link quality according to one embodiment of the present disclosure.
FIG. 5 illustrates a schematic diagram of an execution condition of a first UL transmission according to one embodiment of the present disclosure.
FIG. 6 illustrates a schematic diagram of an execution condition of a first UL transmission according to one embodiment of the present disclosure.
FIG. 7 illustrates a schematic diagram of configuring UL transmission according to one embodiment of the present disclosure.
FIG. 8 illustrates a schematic diagram of leaving conditions according to one embodiment of the present disclosure.
FIG. 9 illustrates a schematic diagram of leaving conditions according to one embodiment of the present disclosure.
FIG. 10 illustrates a schematic diagram of leaving conditions according to one embodiment of the present disclosure.
FIG. 11 illustrates a schematic diagram of leaving conditions according to one embodiment of the present disclosure.
FIG. 12 illustrates a schematic diagram of leaving conditions according to one embodiment of the present disclosure.
FIG. 13 illustrates a flowchart of second UL channel transmission according to one embodiment of the present disclosure.
FIG. 14 illustrates a schematic diagram of leaving condition according to one embodiment of the present disclosure.
FIG. 15 illustrates a schematic diagram of leaving condition according to one embodiment of the present disclosure.
FIG. 16 illustrates a schematic diagram of leaving condition according to one embodiment of the present disclosure
FIG. 17 illustrates a schematic diagram of leaving condition according to one embodiment of the present disclosure.
FIG. 18 illustrates a schematic diagram of leaving condition according to one embodiment of the present disclosure.
FIG. 19 illustrates a flowchart of second UL channel transmission for trigger mode A according to one embodiment of the present disclosure.
FIG. 20 illustrates a schematic diagram of leaving condition according to one embodiment of the present disclosure.
FIG. 21 illustrates a flowchart of second timer starting/restarting according to one embodiment of the present disclosure.
FIG. 22 illustrates a schematic diagram of second timer starting/restarting according to one embodiment of the present disclosure.
FIG. 23 illustrates a schematic diagram of second timer starting/restarting according to one embodiment of the present disclosure.
FIG. 24 illustrates a schematic diagram of second timer starting/restarting according to one embodiment of the present disclosure.
FIG. 25 illustrates a schematic diagram of second timer starting/restarting according to one embodiment of the present disclosure.
FIG. 26 illustrates a schematic diagram of second timer starting/restarting according to one embodiment of the present disclosure.
FIG. 27 illustrates a schematic diagram of leaving condition according to one embodiment of the present disclosure.
FIG. 28 illustrates a flowchart of second UL transmission for trigger mode A according to one embodiment of the present disclosure.
FIG. 29 illustrates a schematic diagram of CSI report configuration according to one embodiment of the present disclosure.
FIG. 30 illustrates a schematic diagram of CSI report configuration according to one embodiment of the present disclosure.
FIG. 31 illustrates a schematic diagram of CSI report configuration according to one embodiment of the present disclosure.
FIG. 32 illustrates a schematic diagram of first PUCCH and second UL channel according to one embodiment of the present disclosure.
FIG. 33 illustrates a schematic diagram of first PUCCH and second UL channel according to one embodiment of the present disclosure.
FIG. 34 illustrates a schematic diagram of first PUCCH and second UL channel according to one embodiment of the present disclosure.
FIG. 35 illustrates a schematic diagram of first PUCCH and second UL channel according to one embodiment of the present disclosure.
FIG. 36 illustrates a schematic diagram of collision handling of first PUCCHs corresponding to different configurations according to one embodiment of the present disclosure.
FIG. 37 illustrates a schematic diagram of collision handling of first PUCCHs corresponding to different configurations according to one embodiment of the present disclosure.
FIG. 38 illustrates a schematic diagram of scheduling of second UL channel according to one embodiment of the present disclosure.
FIG. 39 illustrates a schematic diagram of collision handling of uplink control information (UCI) corresponding to different configurations in second UL channel according to one embodiment of the present disclosure.
FIG. 40 illustrates a schematic diagram of CSI fields in CSI report according to one embodiment of the present disclosure.
FIG. 41 illustrates a flowchart of a method of communication device handling UL transmission according to one embodiment of the present disclosure.
FIG. 42 illustrates a flowchart of a method of communication device handling UL transmission according to one embodiment of the present disclosure.
FIG. 43 illustrates a schematic diagram of a communication device according to one embodiment of the present disclosure.

### DESCRIPTION OF THE EMBODIMENTS

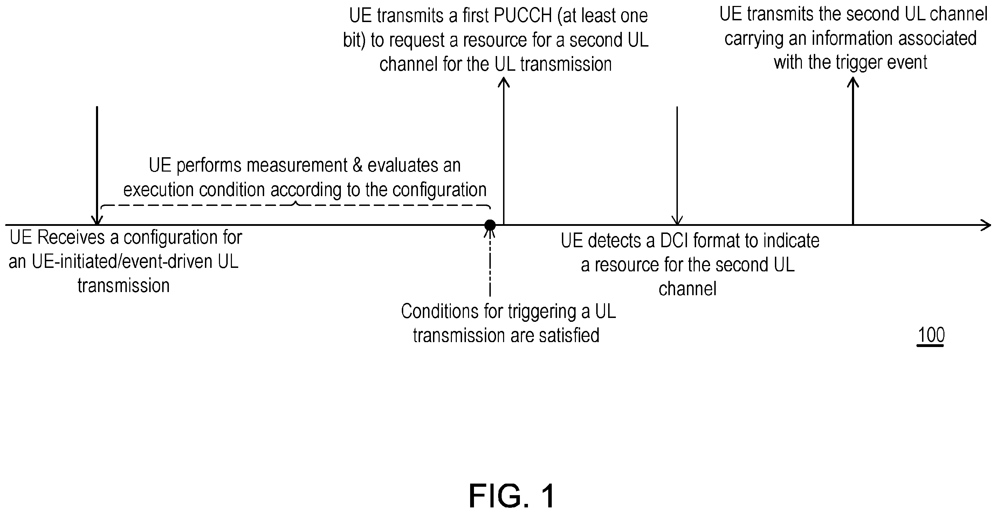

FIG. 1 illustrates a framework 100 of UE-initiated/event-driven UL transmission based on trigger mode A according to one embodiment of the present disclosure. If the report transmission mode is configured to trigger mode A, a second UL channel to be transmitted from a network to a UE may be scheduled by the network (e.g., base station, cell, or gNB), wherein the second UL channel may include a physical uplink shared channel (PUSCH). Specifically, the UE may receive a configuration (e.g., a channel state information (CSI) report configuration) for a UE-initiated/event-driven UL transmission from the network. The configuration may include an event type, one or more resources for the physical uplink control channel (PUCCH), or information of a set of reference signals (e.g., a set of reference signals of one or more candidate beams). The UE may perform one or more channel measurements based on the configuration and may evaluate one or more execution conditions for triggering a UL transmission according to the configuration. The UE may determine whether to transmit one or more second UL channels according to the measurements. If one or more conditions for triggering a UL transmission are satisfied, the UE may transmit a first PUCCH to the network to request one or more resources for one or more second UL channels for the UL transmission, wherein the first PUCCH includes at least one bit of data/information. After the end of the first PUCCH, the UE may detect a downlink control information (DCI) format from the network, wherein the DCI format may indicate one or more resources for the second UL channel. The UE may receive a physical downlink control channel (PDCCH) after the end of the first PUCCH and obtain the DCI from the PDCCH. The UE may transmit the second UL channel via the resource indicated by the DCI, wherein the second UL channel may include one or more measurement reports (e.g., CSI report), information associated with one or more configurations (e.g., CSI report configuration), or information associated with one or more trigger events.

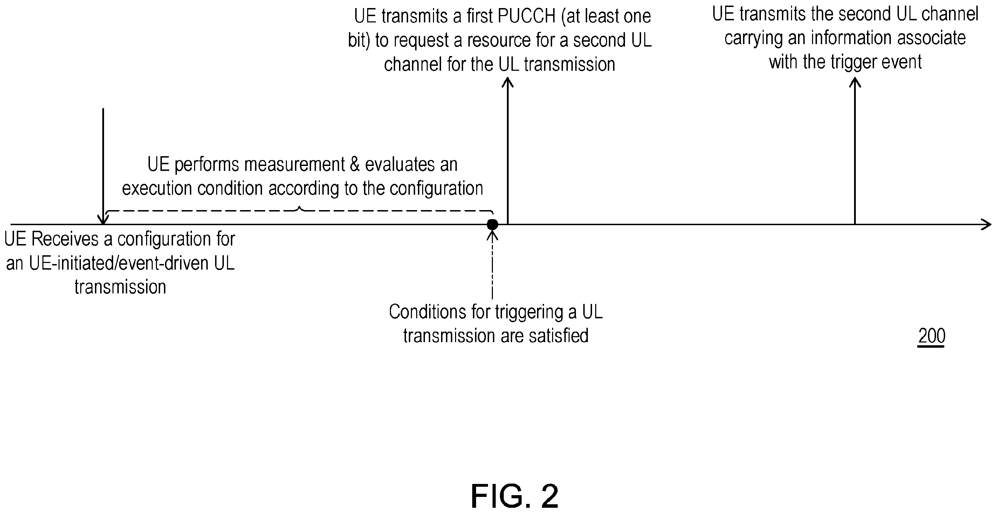

FIG. 2 illustrates a framework 200 of UE-initiated/event-driven UL transmission based on trigger mode B according to one embodiment of the present disclosure. If the report transmission mode is configured to trigger mode B, a second UL channel may be transmitted via one or more pre-configured resources, wherein the second UL channel may include a configured grant PUSCH (CG-PUSCH). Specifically, the UE may receive a configuration (e.g., a CSI report configuration) for a UE-initiated/event-driven UL transmission from the network. The configuration may include an event type, one or more resources for the PUCCH, or information of a set of reference signals. The UE may perform one or more channel measurements based on the configuration and may evaluate one or more execution conditions for triggering a UL transmission according to the configuration. The UE may determine whether to transmit one or more second UL channel according to the measurement. If one or more conditions for triggering a UL transmission are satisfied, the UE may transmit a first physical uplink control channel (PUCCH) to the network to request one or more resources for one or more second UL channels for the UL transmission, wherein the first PUCCH includes at least one bit of data/information. After the end of the first PUCCH, the UE may transmit the second UL channel via the pre-configured resource, wherein the second UL channel may carry information associated with the trigger event. In one example, the second UL channel may include one or more measurement reports (e.g., CSI report), information associated with one or more configurations (e.g., CSI report configuration), or information associated with one or more trigger events.

In one embodiment, the UE may be configured with one or more trigger events for UE-initiated/event-driven UL transmission. The trigger event may be associated with one or more event types. For example, for beam management, quality of beams in a same serving cell may be considered. The trigger event may include: quality of the current beam (e.g., layer 1 reference signal received power (L1-RSRP)) is worse than a threshold; quality of at least one new beam (e.g., L1-RSRP) becomes a threshold value (or offset) better than the current beam; quality of at least one new beam (e.g., L1-RSRP) becomes a threshold value better than the RS, wherein the RS is derived from the activated transmission configuration indicator (TCI) state with the worst quality; and/or quality of at least one new beam (e.g., L1-RSRP) becomes a threshold value better than the RS, wherein the RS is derived from the activated TCI state with the best quality.

For example, for layer L1/layer 2 (L2) triggered mobility (LTM), quality of beams corresponding to different cells may be considered. The trigger event may include: the beam of serving cell becomes worse than an absolute threshold; the beam of candidate cell becomes amount of offset (or a threshold value) better than the beam of serving cell; the beam of candidate cell becomes better than an absolute threshold; and/or the beam of serving cell becomes worse than absolute threshold#1 and the beam of candidate cell becomes better than absolute threshold#2, wherein absolute threshold#1 and absolute threshold#2 can be the same or different.

In one embodiment, the current beam may include at least one reference signal (e.g., synchronization/physical broadcast channel (PBCH) block (SSB) and/or channel state information reference signal (CSI-RS)). The reference signal (RS) may be configured by gNB (e.g., via higher layer signal) or determined according to the TCI state of at least one control resource set (CORESET) for monitoring a PDCCH. The reference signal may be implicitly derived from a RS in an indicated TCI state. For example, the current beam may be the RS corresponding to the indicated TCI state, or the current beam may be an SSB, wherein the SSB may be quasi co-located (QCLed) with the RS corresponding to the indicated TCI state. The TCI state may be indicated by a codepoint of a TCI field included in the DCI format 1_1/1_2 with/without downlink (DL) assignment. The UE may be configured with *dl-OrJointTCI-StateList* or ul-*TCI-StateList* (e.g., for unified TCI framework).

The beam of serving cell may be: the current beam; one of the current beams with the best quality (e.g., RSRP (e.g., L1-RSRP), reference signal received quality (RSRQ), and/or signal to interference plus noise ratio (SINR)); and/or one of the current beams with worst quality (e.g., L1-RSRP, RSRQ and/or SINR).

The beam of candidate cell may be selected from at least one reference signal (e.g., SSB and/or CSI-RS) configured by gNB. For example, the beam of candidate cell may include: one of at least one reference signal with best quality (e.g., L1-RSRP, RSRQ and/or SINR); and/or one of at least one reference signal with worst quality (e.g., L1-RSRP, RSRQ and/or SINR).

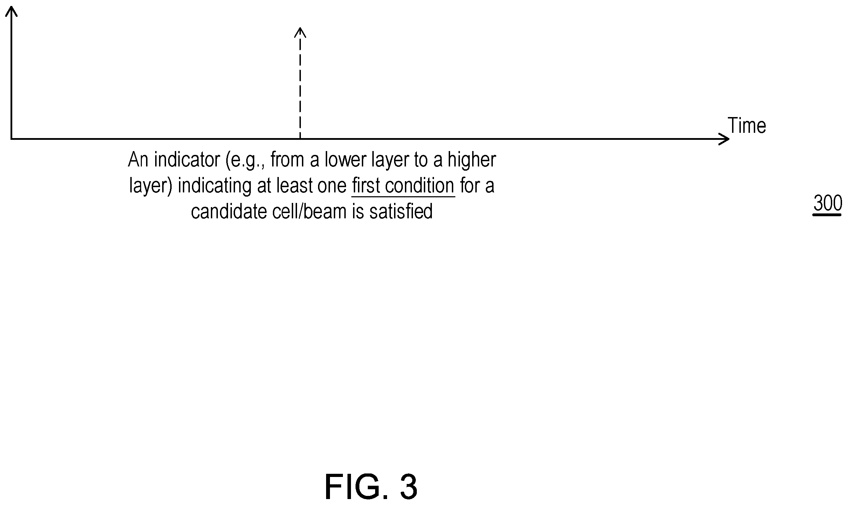

FIG. 3 illustrates a schematic diagram 300 of an indicator for identifying the radio link quality according to one embodiment of the present disclosure. The UE (e.g., of lower or physical layer) may assess the radio link quality of the serving beam/cell and/or a set of candidate beams/cells. For example, the UE may access the radio link quality according to one or more periodic RSs (e.g., synchronization signal (SS), PBCH, and/or CSI-RS) against one or more thresholds and/or hysteresis parameters. The UE may receive an indicator (e.g., from a lower layer to a higher layer of the UE), wherein the indicator may indicate that at least one first condition for a candidate beam/cell is satisfied. The at least one first condition (e.g., corresponding to a configured event) could be satisfied based on the following events: *f*₁(*Mₛ*) *< f*₂(*M_{c}*) (e.g., *f*₂(*M_{c}*) is an offset (or threshold) greater than *f*₁(*Mₛ*)); and/or *g*₁(*Mₛ*) *< Thres*1 *(e.g., g*₁(*Mₛ*) is an offset less than *Thres*1) and/or *g*₂(*M_{c}*) *> Thres2* (e.g., *g*₂(*M_{c}*) is an offset greater than *Thres*2), wherein the offset or threshold mentioned above may be configured to the UE from the network via a higher layer signal.

*f*₁(*Mₛ*) *= Mₛ* or *f*₁(*Mₛ*) *= Mₛ + O_{fs},* wherein *Mₛ* is the measurement result (e.g., L1-RSRP, RSRQ, and/or SINR) of serving cell/beam, and *O_{fs}* is an offset determined according to at least one offset (e.g., cell specific offset or RS specific offset) and/or a hysteresis parameter (e.g., *H_{ys,f}*)*.* For example, *O_{fs}* may be the summation of the at least one offset and/or the hysteresis parameter.

*f*₂(*M_{c}*) *= M_{c}* or *f*₂(*M_{c}*) *= M_{c} + O_{fc},* wherein *M_{c}* is the measurement result (e.g., L1-RSRP, RSRQ, and/or SINR) of candidate cell/beam, and *O_{fc}* is an offset determined according to at least one offset (e.g., cell specific offset or RS specific offset) and/or a hysteresis parameter (e.g., *H_{ys,f}*)*.* For example, *O_{fc}* may be the summation of the at least one offset and/or the hysteresis parameter.

*g*₁(*Mₛ*) *= Mₛ* or *g*₁(*Mₛ*) *= Mₛ + O_{gs},* wherein *Mₛ* is the measurement result (e.g., L1-RSRP, RSRQ, and/or SINR) of serving cell/beam, and *O_{gs}* is an offset determined according to at least one offset (e.g., cell specific offset or RS specific offset) and/or a hysteresis parameter *(e.g., H_{ys,g}*). For example, *O_{gs}* may be the summation of the at least one offset and/or the hysteresis parameter.

*g*₂(*M_{c}*) *= M_{c}* or *g*₂(*M_{c}*) *= M_{c} + O_{gc},* wherein *M_{c}* is the measurement result (e.g., L1-RSRP, RSRQ, and/or SINR) of candidate cell/beam, and *O_{fc}* is an offset determined according to at least one offset (e.g., cell specific offset or RS specific offset) and/or a hysteresis parameter (e.g., *H_{ys,g}*). For example, *O_{gc}* may be the summation of the at least one offset and/or the hysteresis parameter.

*Thresh*1, *Thresh2,* or at least one offset mentioned above or the hysteresis parameter *(e.g., H_{ys,f}* or *H_{ys,g}*) may be (cell specifically or UE specifically) configured by the higher layer signaling from the network.

It should be noted that, in this document, a candidate beam or a candidate cell may be treated as a new beam of a new cell. A serving beam or a serving cell may be treated as a current beam or a current cell, vice versa. A beam may be associated with a reference signal (e.g., CSI-RS and/or SS/PBCH).

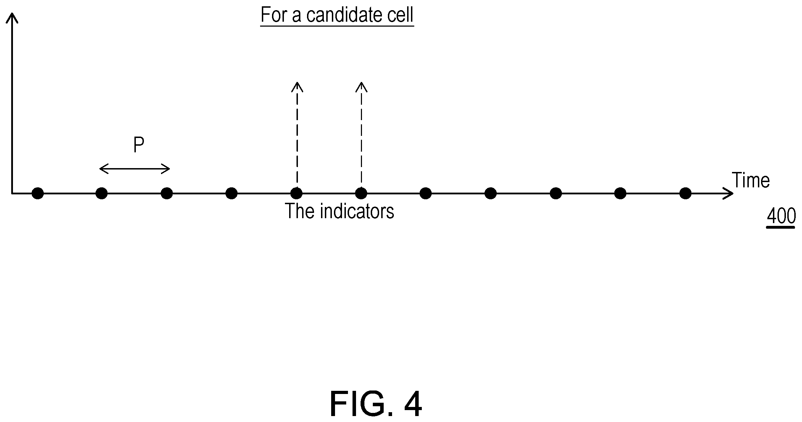

FIG. 4 illustrates a schematic diagram 400 of an indicator for identifying the radio link quality according to one embodiment of the present disclosure. A reporting instance of the indicator (e.g., time interval between two indicators) for a candidate cell may be determined according to the periodicities of reference signals. For example, P = min(*Pₛ*, *P_{c}*), wherein *Pₛ* denotes the periodicity of reference signal (e.g., SS/PBCH) of the serving cell, and *P_{c}* denotes the periodicity of reference signal (e.g., SS/PBCH) of the candidate cell.

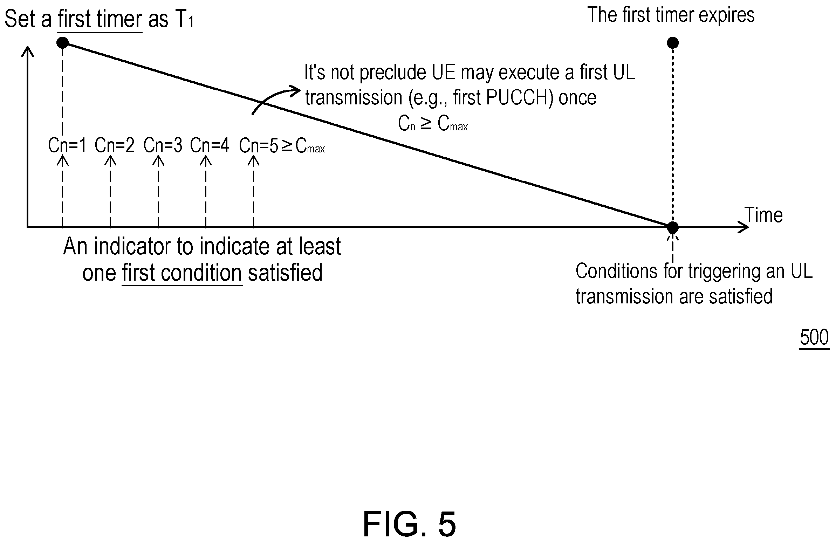

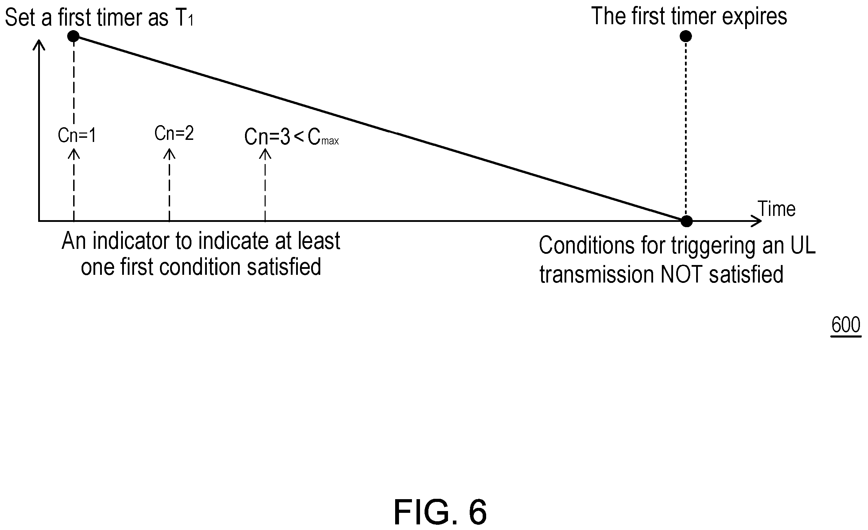

FIG. 5 illustrates a schematic diagram 500 of an execution condition of a first UL transmission according to one embodiment of the present disclosure. FIG. 6 illustrates a schematic diagram 600 of an execution condition of a first UL transmission according to one embodiment of the present disclosure. The UE may execute/trigger a first UL transmission (e.g., first PUCCH) after a first timer expires, if a first counter/number Cn is larger than or equal to a first value *Cₘₐₓ* . That is, the UE may transmit the first UL transmission if the first counter/number Cn is greater than or equal to *Cₘₐₓ* during a time window/time period (the expiry time of the first timer may be equal to the time window), and the UE may not transmit the first UL transmission if the first counter/number Cn is less than *Cₘₐₓ* during the time window/time period, wherein the first timer and/or the threshold may be configured to the UE from the network via a higher layer signal. In other words, the UE may transmit the first UL transmission if the first counter/number Cn is greater than or equal to *Cₘₐₓ* and the first timer does not expire.

When the first timer is not running (i.e., the corresponding time window has not started), the value of the first counter/number Cn may be set to 0 or an initial value. After receiving an indicator, the UE may increase the first counter/number Cn. For example, the UE may increase the first counter/number from 0 to 1 (or set the first counter/number to 1) after receiving the indicator. The first timer may be set to the value *T*₁ (e.g., the first timer or the corresponding time window may start or restart) when the first counter/number Cn is equal to 1 or after receiving the indicator. The first counter/number Cn may represent how many instances (e.g., consecutive instances) of an indicator (e.g., from lower layer), wherein the indicator indicates at least one first condition (e.g., the condition corresponds to the event type configured to the UE) for at least one candidate cell/beam is satisfied. The UE may reset the first counter/number Cn (e.g., to 0) after the first timer (or the corresponding time window) expires or after triggering the first UL transmission.

For example, assume that *Cₘₐₓ* is equal to 5. Referring to FIG. 5, since the first counter/number Cn = 5 becomes greater than or equal to *Cₘₐₓ* during the time window, the UE may determine to trigger an UL transmission (e.g., the first PUSCH). Referring to FIG. 6, since the first counter/number Cn = 3 is less than *Cₘₐₓ* during the time window, the UE may determine not to trigger an UL transmission.

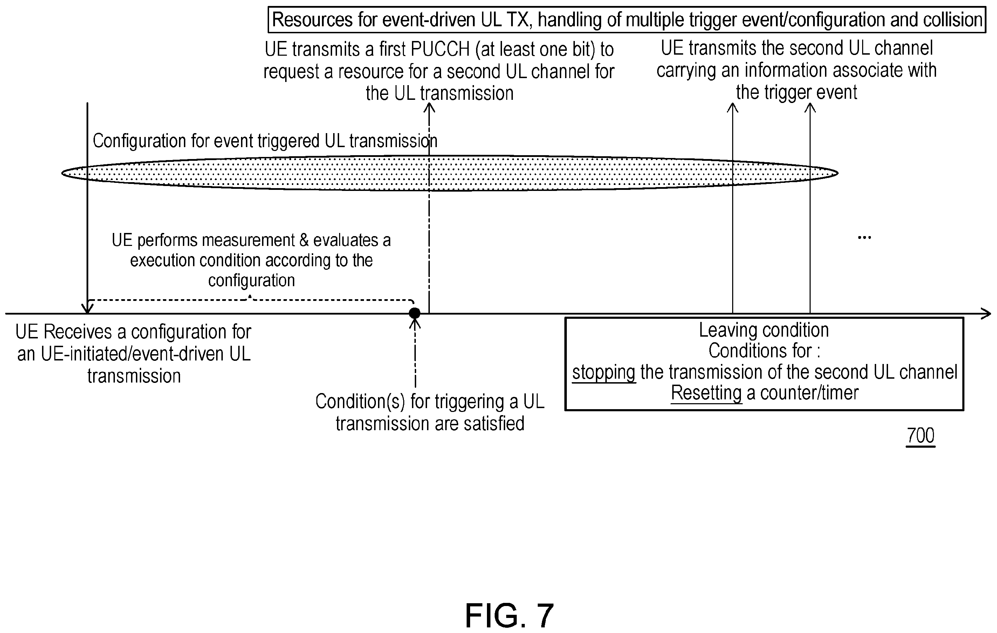

The disclosure means to discuss leaving conditions (conditions for: stopping the transmission of the second UL channel; or resetting a counter/number/timer), configuration for event triggered UL transmission, and resources for event-driven UL transmission (TX) (handling of multiple trigger events/configurations and collision), as shown in FIG. 7, wherein FIG. 7 illustrates a schematic diagram 700 of configuring UL transmission according to one embodiment of the present disclosure.

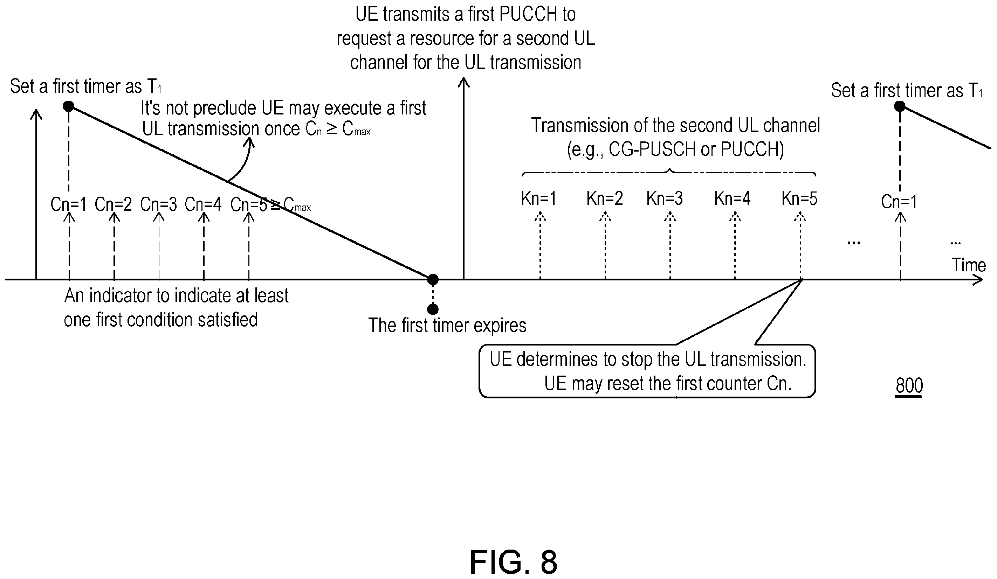

FIG. 8 illustrates a schematic diagram 800 of leaving conditions according to one embodiment of the present disclosure. After the UE transmits a first PUCCH to request one or more resources for one or more second UL channels (e.g., CG-PUSCH, PUCCH or PUSCH), the UE may execute/trigger one or more second UL transmissions. When a leaving condition (e.g., the condition corresponds to the event type configured to the UE) is satisfied, the UE may stop the transmission of second UL channel, and the UE may reset the first counter/number Cn and/or the first timer. For example, the UE may increase the value of counter/number Kn after one second UL channel is transmitted. If counter/number Kn becomes greater than or equal to a default value (e.g., 5), the UE may determine that the leaving condition is satisfied. The UE may stop the transmissions of second UL channel accordingly. That is, the UE may stop the second UL channel transmission after the transmission number of the second UL channel is achieved.

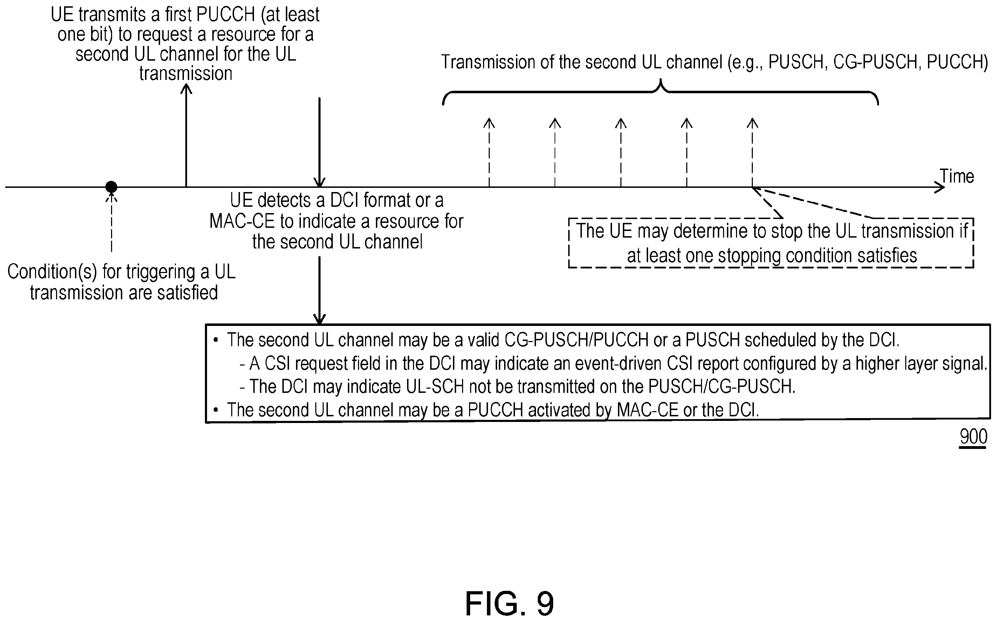

FIG. 9 illustrates a schematic diagram 900 of leaving conditions according to one embodiment of the present disclosure. In trigger mode A, the second UL channel is scheduled by the gNB. The UE may detect a DCI format (or a medium access control (MAC) control element (CE)) indicating a resource for the second UL channel. The second UL channel may be a valid CG-PUSCH/PUCCH or a PUSCH scheduled by the DCI, wherein the DCI may indicate to the UE whether a CG-PUSCH/PUCCH is valid or not. The DCI may indicate an uplink shared channel (UL-SCH) not be transmitted on the PUSCH/CG-PUSCH. The second UL channel may be a PUCCH activated by the DCI (or MAC-CE). The UE may transmit the second UL channel via the resources indicated by the DCI. The UE may determine to stop UL transmission if at least one stopping condition is satisfied.

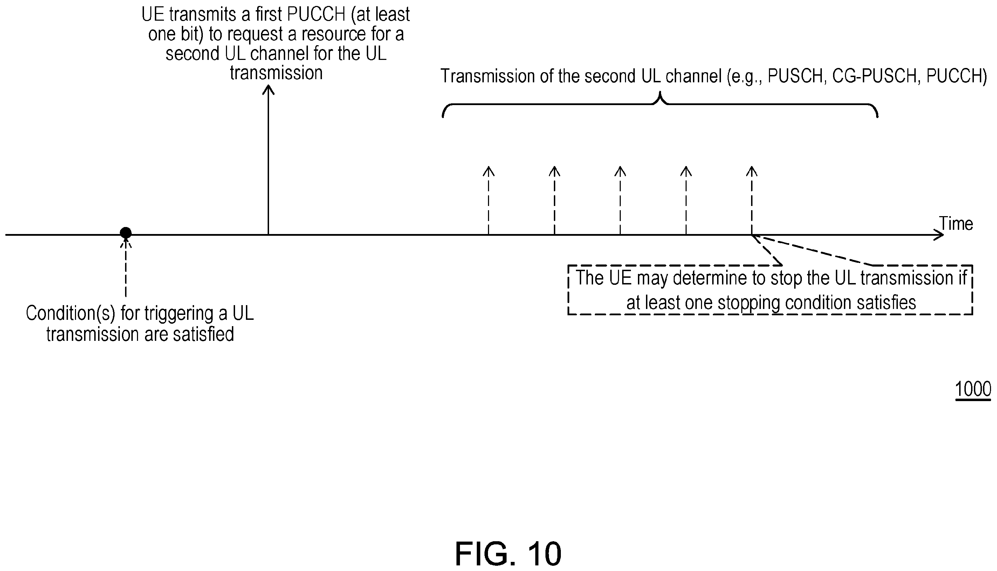

FIG. 10 illustrates a schematic diagram 1000 of leaving conditions according to one embodiment of the present disclosure. In trigger mode B, the second UL channel is transmitted via pre-configured resources. The second UL channel may be a PUSCH, a CG-PUSCH, or a PUCCH. The UE may transmit the second UL channel via the resources pre-configured to the UE. The UE may determine to stop the UL transmission if at least one stopping condition is satisfied.

In one embodiment, the UE may determine a leaving condition (e.g., leaving condition for the first UL channel or the second UL channel) is satisfied based on the following events: the UE receives an indicator (e.g., via a MAC-CE) for updating at least one beam, wherein the indicator may be an Indication of TCI state for UE-specific PDCCH or an Activation/Deactivation of UE-specific PDSCH TCI state, wherein the UE may stop the UL transmission after transmitting a hybrid automatic repeat request (HARQ) acknowledgement (ACK) corresponding to the indicator; the UE receives an indicator (e.g., via a DCI format 1_1/1_2 with/without DL assignment) indicating a TCI state (e.g., when the UE is configured with *unifiedTCI-StateType, dl-OrJointTCI-StateList,* and/or *ul-TCI-StateList* for unified TCI state operation, wherein the *unifiedTCI-StateType* may indicate the unified TCI state type as *dl-OrJointTCI-StateList* or *ul-TCI-StateList*), wherein the indicated TCI state may be different from the previously indicated TCI state; the UE receives a PDCCH order for initiating a random access procedure (e.g., via a DCI format 1_0), wherein a cell indicator field in the PDCCH order may indicate a candidate cell (e.g., the cell corresponds to the execution condition triggering the UL transmission); and/or the UE receives a cell switching command (e.g., via a MAC-CE in a PDSCH), wherein the UE may stop the UL transmission after transmitting a HARQ-ACK corresponding to the indicator (e.g., PDSCH). In one embodiment, the UE may reset a counter/number or set the value of the counter/number to 0 upon receiving the indicator, wherein the counter/number may include counter/number Kn, the first counter/number Cn, or the second counter/number Cm which will be described in the following paragraph.

In one embodiment, the UE may determine a leaving condition is satisfied if an indicator for stopping the second UL channel transmission is received by the UE. The UE may determine the leaving condition is satisfied based on the following events: if the second UL channel is a CG-PUSCH, the UE may receive a DCI indicating the CG-PUSCH validation is released; if the second UL channel is a PUCCH, the UE may receive a DCI or a MAC-CE indicating the PUCCH validation is released; and/or if the second UL channel is a PUSCH scheduled by a DCI, the UE may determine a transmission number of the second UL channel (e.g., according to a higher layer configuration such as *pusch-AggregationFactor* or a field (e.g., time domain resource allocation (TDRA)) in the DCI). The UE may stop the second UL channel transmission after the transmission number of the second UL channel is achieved.

In one embodiment, when the UE is configured with a cell discontinuous reception (DRX) configuration and the transmission occasion of the second UL channel is within a cell DRX off duration: the UE may stop the transmission of second UL channel, or the UE may keep transmitting the second UL channel (e.g., according to gNB configuration).

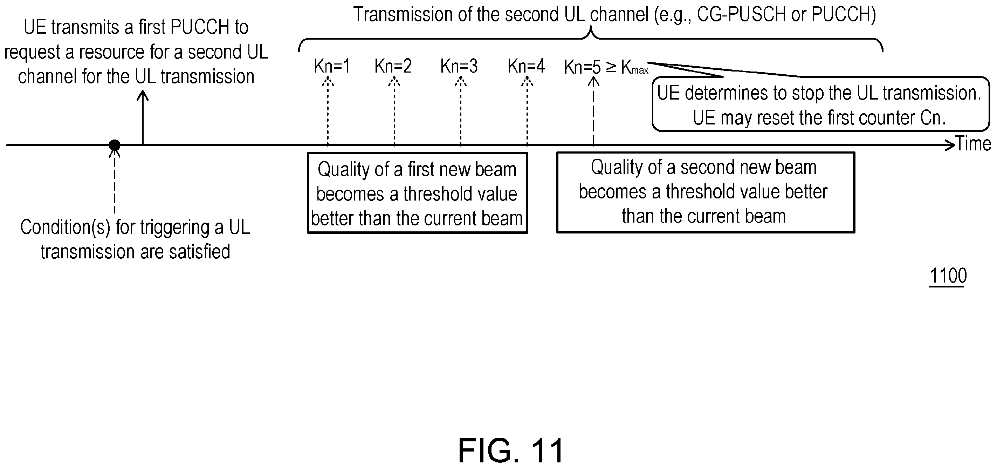

FIG. 11 illustrates a schematic diagram 1100 of leaving conditions according to one embodiment of the present disclosure. The UE may determine a leaving condition is satisfied if the number of transmissions (e.g., value of counter/number Kn) or the transmission occasions of the second UL channel are greater than or equal to a pre-configured value *Kₘₐₓ* (e.g., *Kₘₐₓ* = 5). The UE may report that the quality of a new beam (e.g., first new beam or second new beam) becomes a threshold value better than the current beam by transmitting a second UL channel to the network. The UE may increase counter/number Kn after transmitting a second UL channel. For example, assume that *Kₘₐₓ* = 5. The UE may report the quality of a first new beam to the network four times, and counter/number Kn may be increased from 1 to 4. After that, if there is a status update (e.g., the quality of a second new beam becomes better than the current beam), the UE may report the quality of the second new beam to the network, and counter/number Kn may be increased to 5. Since counter/number Kn becomes equal to *Kₘₐₓ*, the UE may determine to stop the UL transmission, and the UE may reset the first counter/number Cn accordingly.

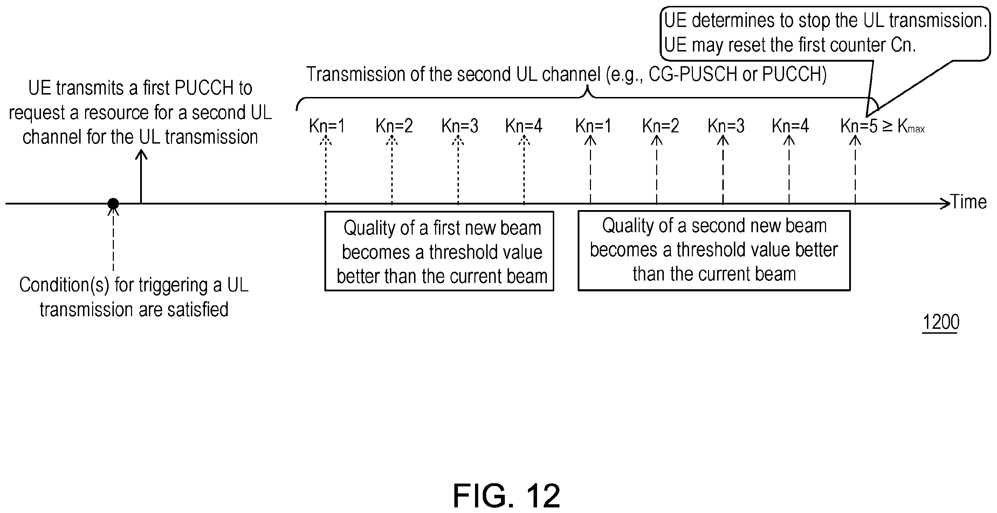

FIG. 12 illustrates a schematic diagram 1200 of leaving conditions according to one embodiment of the present disclosure. The UE may determine a leaving condition is satisfied if there is no status update within (or after) *Kₘₐₓ* transmission occasions, and the transmission occasions of the second UL channel are greater than or equal to *Kₘₐₓ* (e.g., *Kₘₐₓ* = 5). The UE may report that the quality of a new beam (e.g., first new beam or second new beam) becomes a threshold value better than the current beam by transmitting a second UL channel to the network. The UE may increase counter/number Kn after transmitting a second UL channel. If there is a status update (e.g., the quality of another new beam becomes better than the current beam), the UE may reset counter/number Kn. For example, assume that *Kₘₐₓ* = 5. The UE may report the quality of a first new beam to the network four times, and counter/number Kn may be increased from 1 to 4. After that, since there is a status update, the UE may reset counter/number Kn, then the UE may report the quality of the second new beam to the network and increase counter/number Kn accordingly. After the UE report the quality of the second new beam five times, the counter/number Kn may be increased to 5. Since counter/number Kn becomes equal to *Kₘₐₓ* and there is not status update within *Kₘₐₓ* transmission occasions, the UE may determine to stop the UL transmission, and the UE may reset the first counter/number Cn accordingly. When the second UL channel is transmitted due to a first new beam/cell satisfies a trigger event, the UE may stop transmitting the second UL channel if no other beam/cell (e.g., second new beam) satisfies the trigger event. For example, after the UE reports the quality of the first new beam four times (i.e., Kn = 4), the UE may stop transmitting the second UL channel if the second new beam does not satisfy the trigger event.

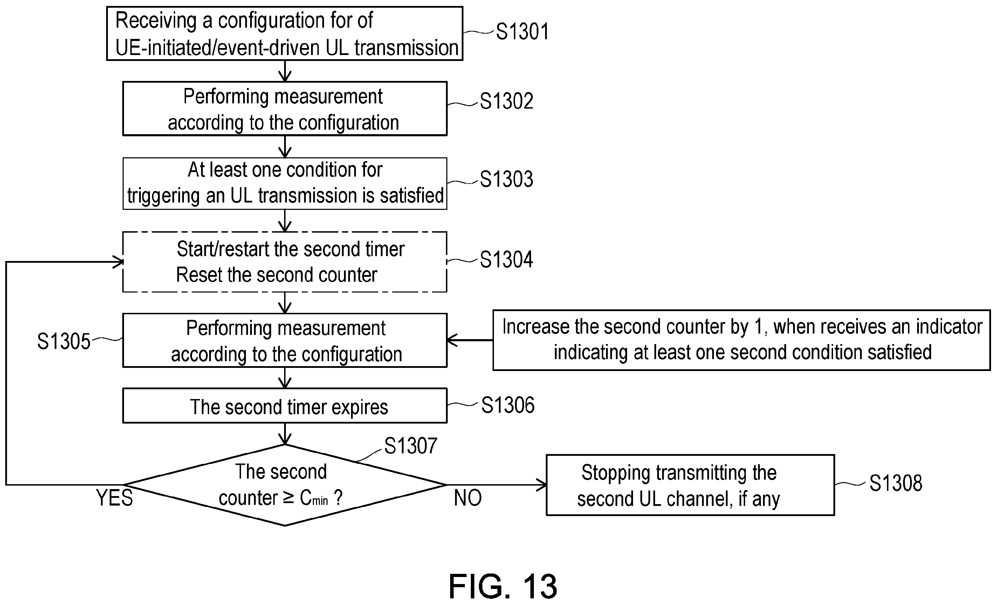

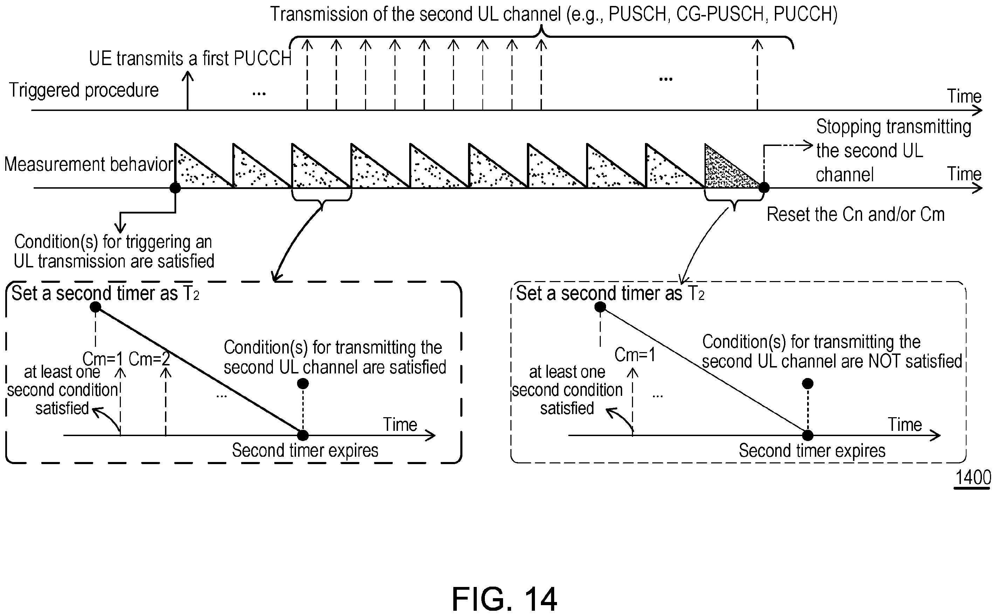

FIG. 13 illustrates a flowchart of second UL channel transmission according to one embodiment of the present disclosure. FIG. 14 illustrates a schematic diagram 1400 of leaving condition according to one embodiment of the present disclosure. Referring to FIG. 13 and FIG. 14, in step S1301, the UE may receive a configuration (e.g., CSI report configuration) for UE-initiated/event driven UL transmission from the network. In step S1302, the UE may perform measurement (e.g., channel measurement) according to the configuration. In step S1303, the UE may determine at least one condition for triggering an UL transmission is satisfied based on the measurement result. The at least one condition for triggering the UL transmission may be similar to the at least one condition as mentioned in FIG. 5. In step S1304, the UE may start or restart the second timer or reset the second counter/number Cm in response to determining at least one second condition is satisfied. In step S1305, the UE may perform measurement according to the configuration. The UE may increase the second counter/number Cm by 1 when the UE receive an indicator indicating at least one second condition is satisfied. The at least one second condition may be similar to the at least one first condition as mentioned in FIG. 3. In step S1306, the UE may determine the second timer expires. After the second timer expires, in step S1307, the UE may determine whether the second counter/number Cm is greater than or equal to *Cₘᵢₙ.* If the second counter/number Cm is greater than or equal to *Cₘᵢₙ,* the UE may determine that at least one condition for triggering the transmission of a second UL channel is satisfied. Accordingly, the UE may perform the transmission of the second UL channel, and the UE may perform step S1304 again to restart the second timer or reset the second counter/number. If the second Cm is less than *Cₘᵢₙ,* the UE may determine the leaving condition is satisfied and may stop transmitting the second UL channel if there are second UL channels to be transmitted, as shown in step S1308.

Specifically, the UE may execute/trigger a second UL channel transmission (e.g., PUSCH, CG-PUSCH, or PUCCH) after the second timer expires, if the second counter/number Cm is larger than or equal to a threshold. That is, the UE may transmit the second UL channel transmission if the second counter/number Cm is greater than or equal to *Cₘᵢₙ* during a time window/time period (the expiry time of the second timer may be equal to the time window), and the UE may not transmit the second UL channel if the second counter/number Cm is less than *Cₘᵢₙ* during the time window/time period, wherein the second timer and/or the threshold may be configured to the UE from the network via a higher layer signal.

When the second timer is not running (i.e., the corresponding time window has not started), the value of the second counter/number Cm may be set to 0 or an initial value. After receiving an indicator, the UE may increase the second counter/number Cm. For example, the UE may increase the second counter/number from 0 to 1 after receiving the indicator. The second timer may be set to the value *T*₂ (e.g., the second timer may start or restart) when the second counter/number Cm is equal to 1 or after receiving the indicator. The second counter/number Cm may represent how many instances (e.g., consecutive instances) of an indicator (e.g., from lower layer), wherein the indicator indicates at least one second condition (e.g., the condition corresponds to the event type configured to the UE) for at least one candidate cell/beam is satisfied. The UE may reset the second counter/number Cn (e.g., to 0) after the second timer (or the corresponding time window) expires or after triggering the second UL transmission.

In one embodiment, after determining the at least one second condition is not satisfied, the UE may reset the first counter/number Cn and/or the second counter/number Cm.

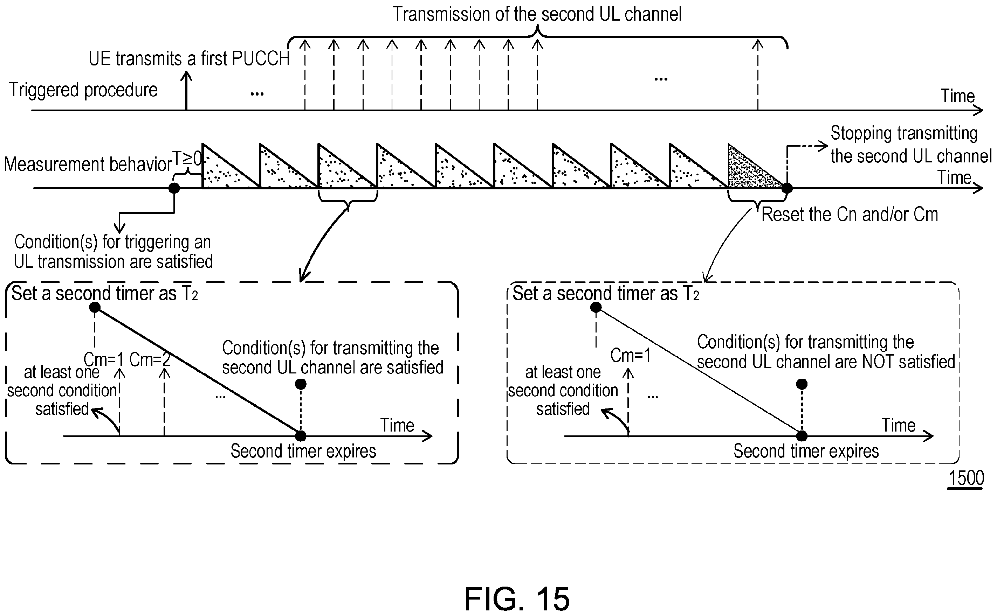

FIG. 15 illustrates a schematic diagram 1500 of leaving condition according to one embodiment of the present disclosure. In one embodiment, the UE may start or restart the second timer or reset the second counter/number Cm an offset T later than the reception of an indicator, wherein the indicator may indicate the at least one condition for triggering an UL transmission is satisfied.

In one embodiment, the UE may stop the transmission of second UL channel based on the following events: the number of second UL channel transmission (Kn) is greater than or equal to a pre-configured value Kmax; a time period for transmitting second UL channel is greater than or equal to a pre-configured value (e.g., 5 ms or slots), and/or the second counter/number Cm is less than the second value *Cₘᵢₙ* (or equal to 0) after a second timer expires. Otherwise, the UE may transmit the second UL channel and start or restart the second timer after the second timer expires. The second counter/number Cm may represent how many (e.g., consecutive) instances an indicator (e.g., from lower layer) indicating that at least one second condition is satisfied for at least one candidate cell/beam. The UE may start or restart the second timer (e.g., set to *T*₂) based on the following events: one or more conditions for triggering an UL transmission are satisfied (e.g., after the first timer expires and/or the first counter/number Cn is greater than or equal to the first value *Cₘₐₓ*); after transmitting the first PUCCH; upon receiving a DCI indicating a resource for the second UL channel; and/or upon first (or X-th) transmission of second UL channel, where X is a positive integer. The UE may reset the second counter/number Cm (e.g., set to 0) upon the second timer starting or restarting

The condition of "a second counter/number Cm is less than a second value *Cₘᵢₙ* (or equal to 0) after a second timer expires" may be represented as: "a second counter/number Cm is less than a second value *Cₘᵢₙ* (or equal to 0) within a time period or a time window (e.g., *T*₂)".

In one embodiment, the at least one first condition and the at least one second condition are the same.

In one embodiment, the at least one first condition and the at least one second condition are corresponded to different set of offset values and/or different set of hysteresis parameters.

In one embodiment, the UE may report the UE's capability about whether the UE supports this mechanism (e.g., the leaving conditions mentioned above) or not. Same concept may apply to embodiment disclosed later.

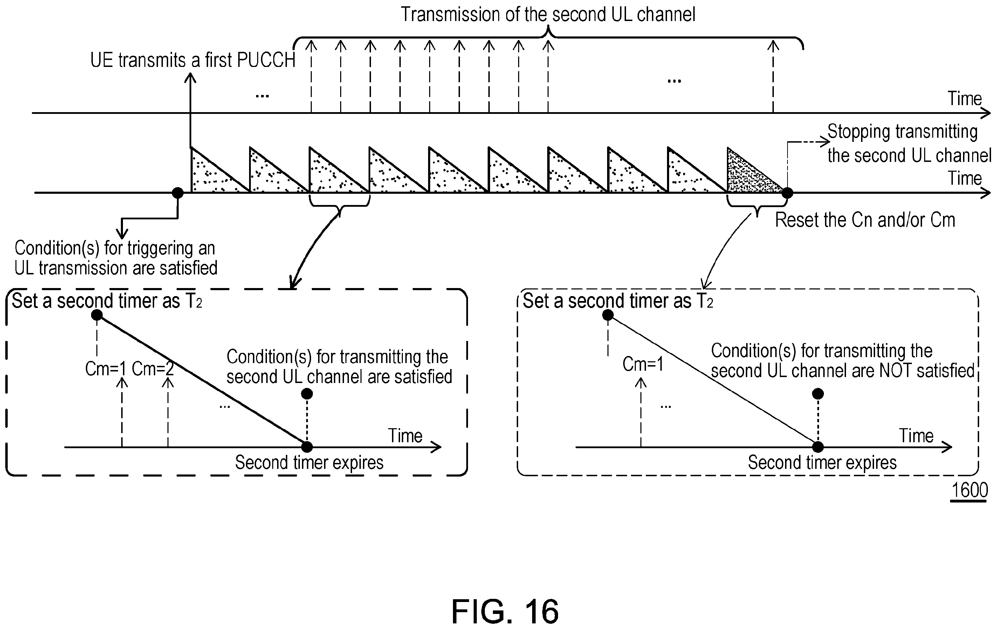

FIG. 16 illustrates a schematic diagram 1600 of leaving condition according to one embodiment of the present disclosure. In one embodiment, the UE may start or restart the second timer or reset the second counter/number Cm in response to transmitting a first PUCCH.

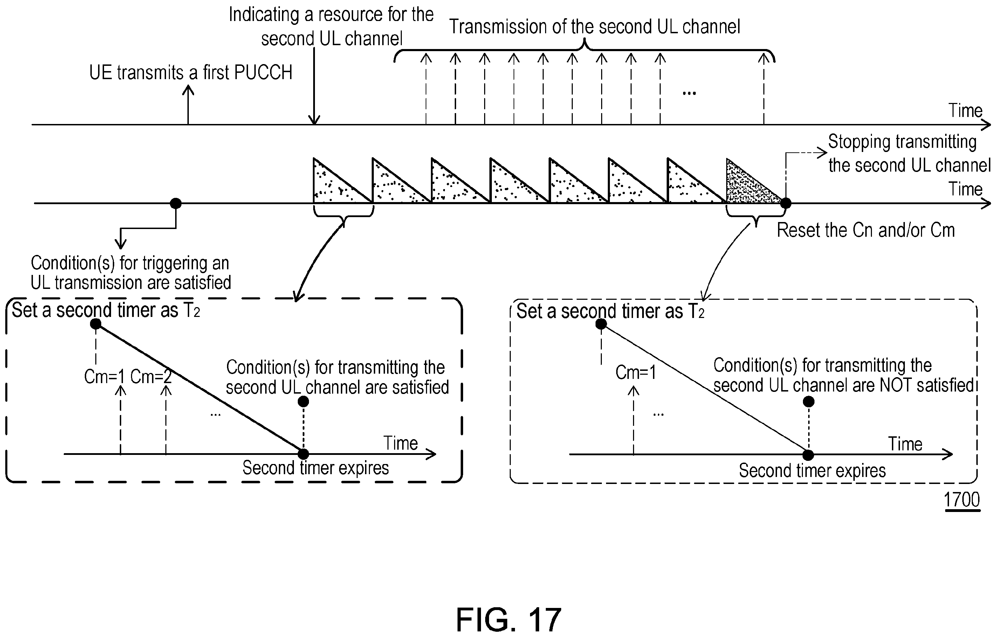

FIG. 17 illustrates a schematic diagram 1700 of leaving condition according to one embodiment of the present disclosure. In one embodiment, the UE may start or restart the second timer or reset the second counter/number Cm in response to receiving an indicator indicating a resource for the second UL channel.

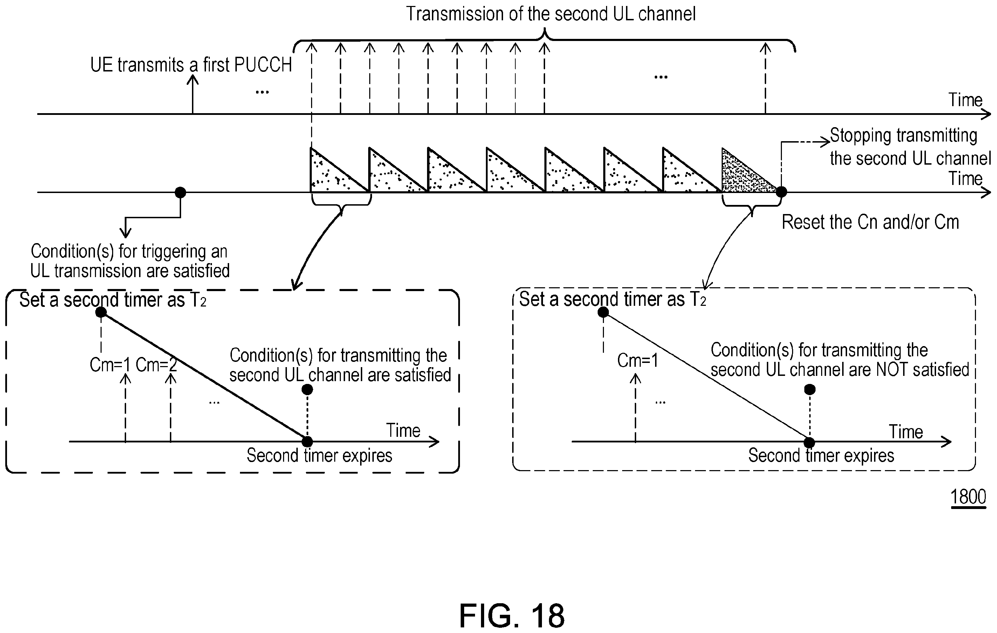

FIG. 18 illustrates a schematic diagram 1800 of leaving condition according to one embodiment of the present disclosure. In one embodiment, the UE may start or restart the second timer or reset the second counter/number Cm in response to transmitting the second UL channel.

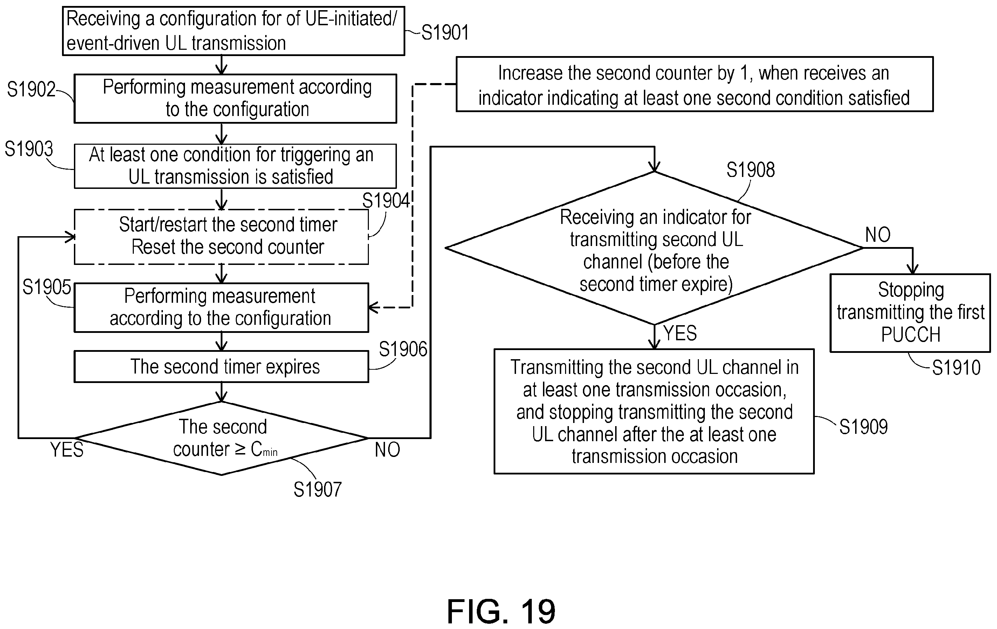

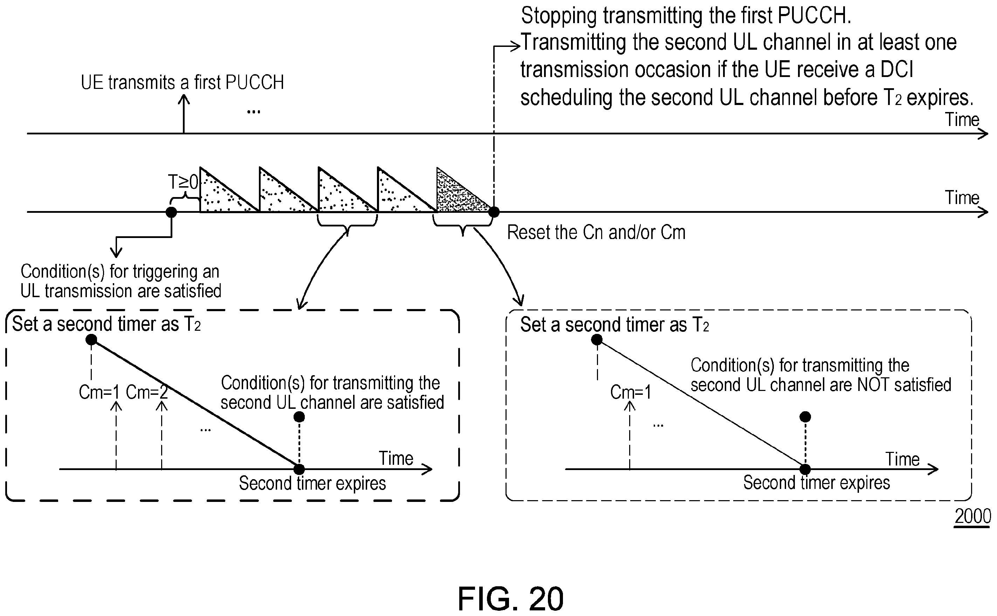

FIG. 19 illustrates a flowchart of second UL channel transmission for trigger mode A according to one embodiment of the present disclosure. FIG. 20 illustrates a schematic diagram 2000 of leaving condition according to one embodiment of the present disclosure. Referring to FIG. 19 and FIG. 20, in step S1901, the UE may receive a configuration (e.g., CSI report configuration) for UE-initiated/event driven UL transmission from the network. In step S1902, the UE may perform measurement (e.g., channel measurement) according to the configuration. In step S1903, the UE may determine at least one condition for triggering an UL transmission is satisfied based on the measurement result. In step S1904, the UE may start or restart the second timer or reset the second counter/number Cm in response to determining at least one second condition is satisfied. In step S1905, the UE may perform measurement according to the configuration. The UE may increase the second counter/number Cm by 1 when the UE receive an indicator indicating at least one second condition is satisfied. In step S1906, the UE may determine the second timer expires. After the second timer expires, in step S1907, the UE may determine whether the second counter/number Cm is greater than or equal to *Cₘᵢₙ.* If the second counter/number Cm is greater than or equal to *Cₘᵢₙ,* the UE may determine that at least one condition for triggering the transmission of a second UL channel is satisfied. Accordingly, the UE may perform the transmission of the second UL channel, and the UE may perform step S1904 again to restart the second timer or reset the second counter/number.

If the second Cm is less than *Cₘᵢₙ,* in step S1908, the UE may determine whether the UE receives an indicator for transmitting a second UL channel (before the second timer expires). The indicator may include a DCI for scheduling the second UL channel before the second timer (e.g., *T*₂) expires. If the UE receives the DCI during the time window (i.e., before the second timer expires), the UE may execute step S1909. If the UE does not receive the DCI, the UE may execute step S1910. In step S1909, the UE may transmit the second UL channel in at least one transmission occasion, then the UE may stop transmitting the second UL channel after the at least one transmission occasion. In step S1910, the UE may stop transmitting the first PUCCH. In other words, if the UE receives the DCI (e.g., before the second timer expires), the UE may perform the transmission of the second UL channel in at least one transmission occasion even if one or more leaving conditions are satisfied. Otherwise, the UE may stop transmitting the first PUCCH for requesting the second UL channel due to the satisfaction of one or more leaving conditions.

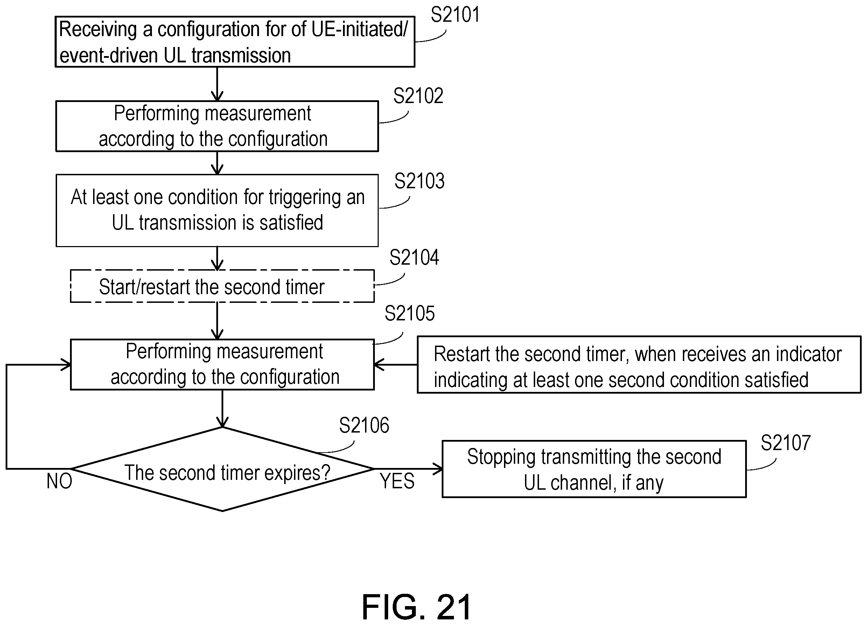

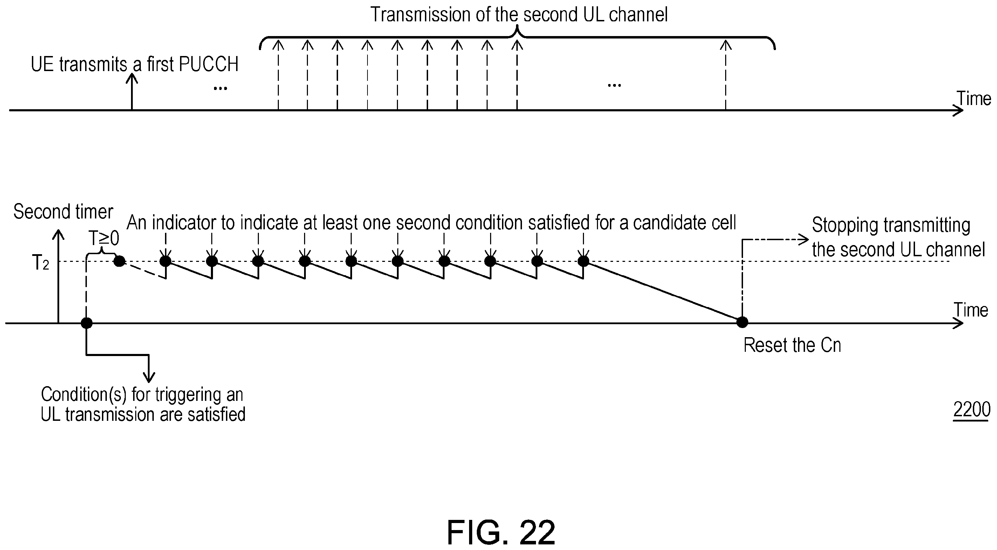

FIG. 21 illustrates a flowchart of second UL channel transmission according to one embodiment of the present disclosure. FIG. 22 illustrates a schematic diagram 2200 of second timer starting/restarting according to one embodiment of the present disclosure. In one embodiment, the UE may restart the second timer when the UE receives an indicator (from lower layer), wherein the indicator indicates that at least one second condition is satisfied for a candidate cell.

Referring to FIG. 21 and FIG. 22, in step S2101, the UE may receive a configuration (e.g., CSI report configuration) for UE-initiated/event driven UL transmission from the network. In step S2102, the UE may perform measurement (e.g., channel measurement) according to the configuration. In step S2103, the UE may determine at least one condition for triggering an UL transmission is satisfied based on the measurement result. In step S2104, the UE may start or restart the second timer or reset the second counter/number Cm (e.g. in response to determining at least one second condition is satisfied). In step S2105, the UE may perform measurement according to the configuration. When the UE receives an indicator indicating at least one second condition is satisfied during the time window corresponding to the second timer, the UE may restart the second timer. In step S2106, the UE may determine whether the second timer expires. If the second timer does not expire, the UE may execute step S2105 again to keep monitoring whether one or more second conditions are satisfied. If the second timer expires, the UE may execute step S2107. In step S2107, the UE may determine the leaving condition is satisfied and may stop transmitting the second UL channel.

As shown in FIG. 22, the value of the second timer may decrease from *T*₂ over time. However, if the UE receives an indicator before the second timer expires, the UE may reset the value of the second timer to *T*₂. In one embodiment, the UE may restart the second timer when the UE receives an indicator after one or more conditions for triggering a UL transmission (e.g., transmission of second UL channel) are satisfied.

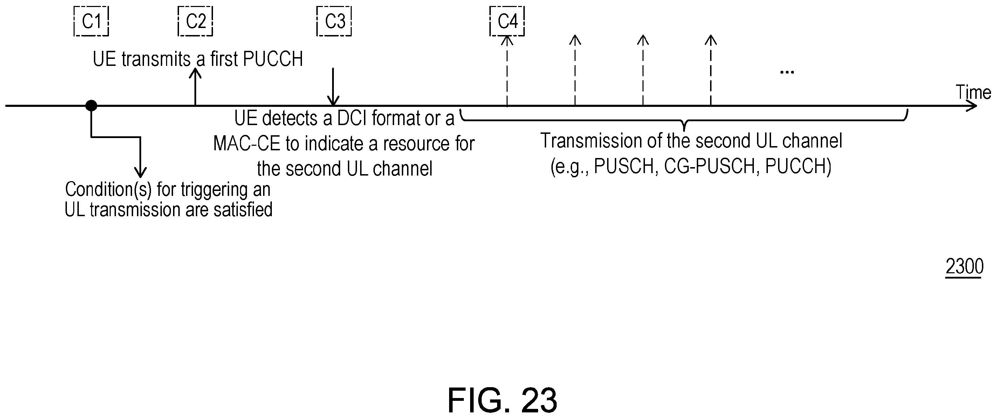

FIG. 23 illustrates a schematic diagram 2300 of second timer starting/restarting according to one embodiment of the present disclosure. In one embodiment, the UE may start or restart the second timer (e.g., set to *T*₂) based on the following events: event C1: upon the first timer expires (or after the first timer expires) and/or the first counter/number Cn being greater than or equal to the first value *Cₘₐₓ* ; event C2: upon transmitting the first PUCCH (or after transmitting the first PUCCH); event C3: upon receiving a DCI indicating a resource for the second UL channel; and/or event C4: upon first (or X-th) transmission of the second UL channel, wherein X may be a fixed value or may be configured by a radio resource control (RRC) message.

In one embodiment, the UE may stop the transmission of second UL channel based on the following events: the second timer or the corresponding time window expires (or not running); a number of second UL channel transmission (e.g., Kn) is greater than or equal to a pre-configured value *Kₘₐₓ* (e.g., 3); and/or a time period for transmitting the second UL channel is greater than or equal to a pre-configured value (e.g., 5 ms or 5 slots).

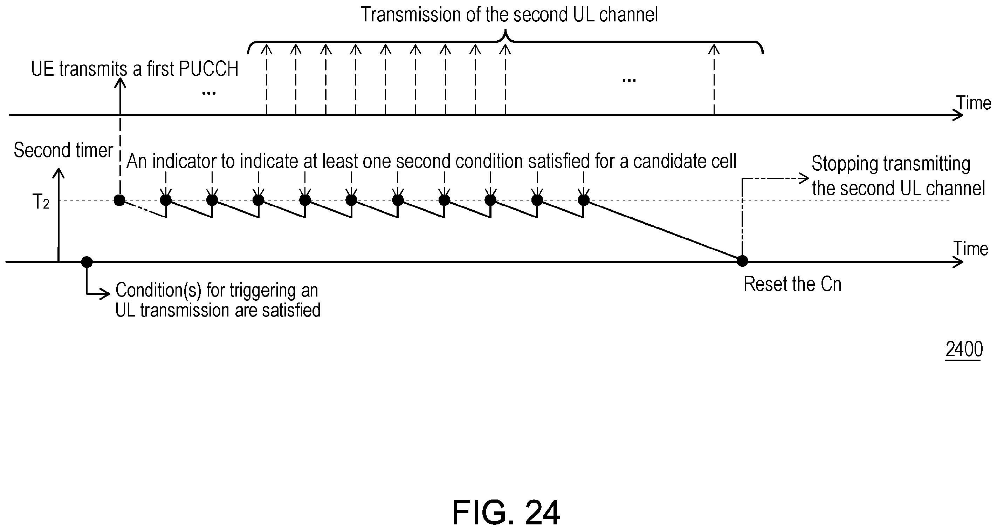

FIG. 24 illustrates a schematic diagram 2400 of second timer starting/restarting according to one embodiment of the present disclosure. The UE may start the second timer (e.g., set to *T*₂) upon transmitting the first PUCCH or after transmitting the first PUCCH. The UE may restart the second timer (e.g., reset to *T*₂) when the UE receives an indicator (e.g., from lower layer) indicating at last one second condition is satisfied for a candidate cell.

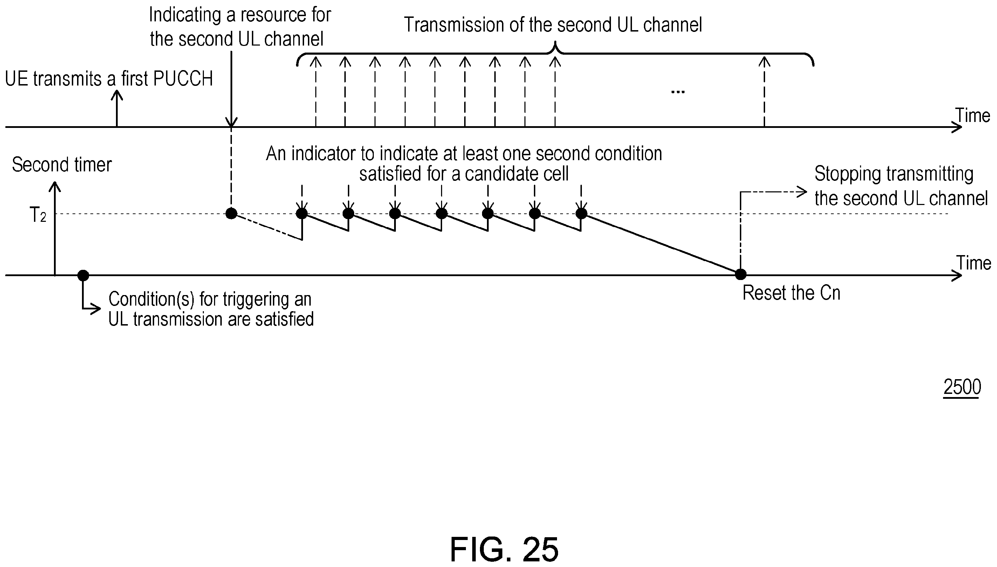

FIG. 25 illustrates a schematic diagram 2500 of second timer starting/restarting according to one embodiment of the present disclosure. The UE may start the second timer (e.g., set to *T*₂) upon receiving a DCI, wherein the DCI indicates a resource for the second UL channel. The UE may restart the second timer (e.g., reset to *T*₂) when the UE receives an indicator (e.g., from lower layer) indicating at last one second condition is satisfied for a candidate cell.

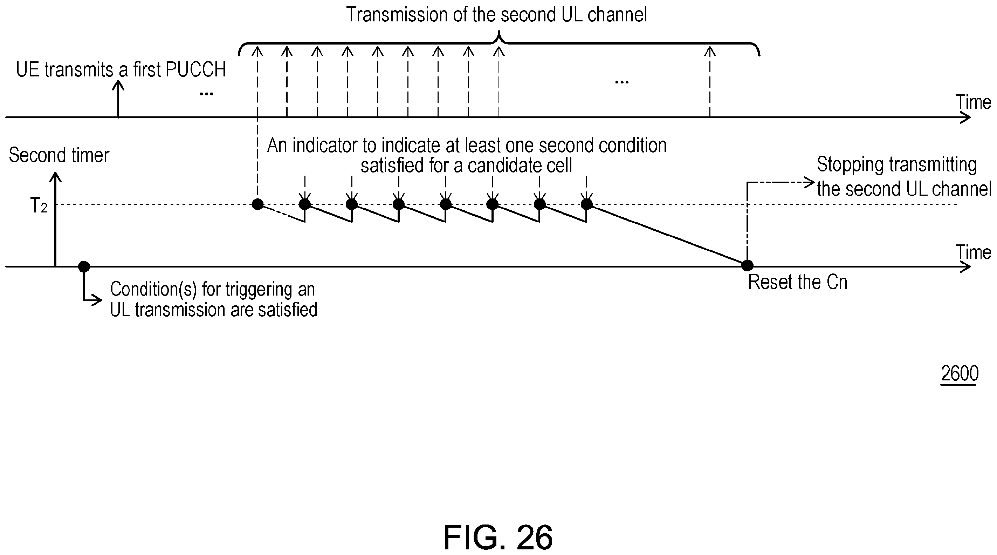

FIG. 26 illustrates a schematic diagram 2600 of second timer starting/restarting according to one embodiment of the present disclosure. The UE may start the second timer (e.g., set to *T*₂) upon receiving the first (or X-th) transmission of second UL channel or after receiving the first (or X-th) transmission of second UL channel. The UE may restart the second timer (e.g., reset to *T*₂) when the UE receives an indicator (e.g., from lower layer) indicating at last one second condition is satisfied for a candidate cell.

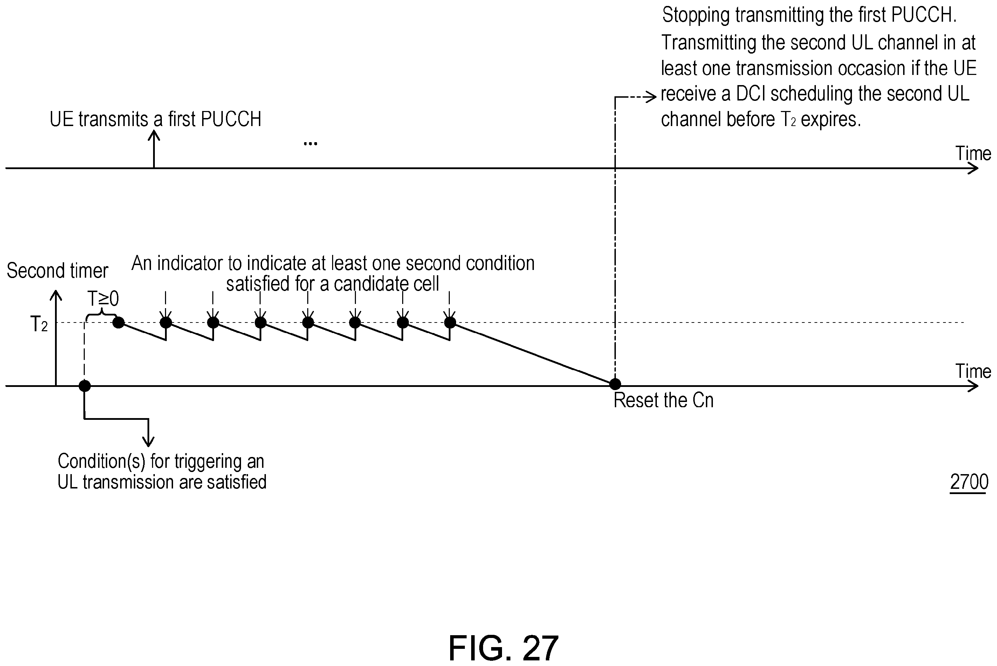

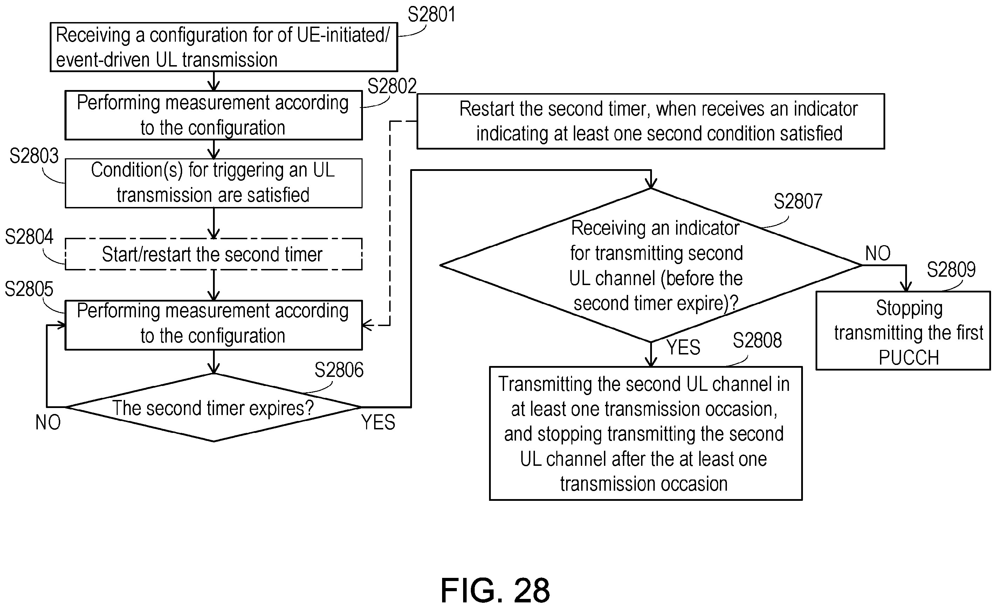

FIG. 27 illustrates a schematic diagram 2700 of leaving condition according to one embodiment of the present disclosure. FIG. 28 illustrates a flowchart of second UL transmission (e.g., for trigger mode A) according to one embodiment of the present disclosure. Referring to FIG. 27 and FIG. 28, in step S2801, the UE may receive a configuration (e.g., CSI report configuration) for UE-initiated/event driven UL transmission from the network. In step S2802, the UE may perform measurement (e.g., channel measurement) according to the configuration. In step S2803, the UE may determine at least one condition for triggering an UL transmission is satisfied based on the measurement result. In step S2804, the UE may start or restart the second timer in response to determining at least one second condition is satisfied. In step S2805, the UE may perform measurement according to the configuration. The UE may restart the second timer when the UE receives an indicator indicating at least one second condition is satisfied. In step S2806, the UE may determine whether the second timer expires. If the second time does not expire, the UE may execute step S2805 again to keep monitoring whether one or more second conditions are satisfied. If the second timer expires, the UE may execute step S2807.

In step S2807, the UE may determine whether the UE receives an indicator for transmitting a second UL channel (before the second timer expires). The indicator may include a DCI for scheduling the second UL channel (e.g., before the second timer expires). If the UE receives the DCI during the time window (i.e., before the second timer expires), the UE may execute step S2808. If the UE does not receive the DCI, the UE may execute step S2809. In step S2808, the UE may transmit the second UL channel in at least one transmission occasion, then the UE may stop transmitting the second UL channel after the at least on transmission occasion. In step S2809, the UE may stop transmitting the first PUCCH. In other words, if the UE receives the DCI (e.g., before the second timer expires), the UE may perform the transmission of the second UL channel in at least one transmission occasion even if one or more leaving conditions are satisfied. Otherwise, the UE may stop transmitting the first PUCCH for requesting the second UL channel due to the satisfaction of one or more leaving conditions.

In one embodiment, a trigger event (e.g., UE-initiated/event-driven) configuration may be indicated to the UE by a CSI report configuration. Alternatively, the first PUCCH resource may be indicated by the CSI report configuration.

In one embodiment, the trigger event configuration may indicate a CSI report configuration to the UE. The CSI report configuration may provide second UL channel related information. The CSI report configuration may be the LTM CSI report configuration. Alternatively, the first PUCCH resource may be indicated by the CSI report configuration with an ID (e.g., lowest ID) which is for UE-initiated/event-driven UL transmission.

In one embodiment, a first PUCCH resource (e.g., resource for UE-initiated/event-driven UL transmission) may be indicated to the UE by the trigger event configuration. For example, the UE may be configured with at least one trigger event configuration (e.g., per cell group). In one embodiment, a first PUCCH resource may be indicated to the UE by other configuration (e.g., *MAC-CellGroup Configuration)* or a trigger event configuration with an ID (e.g., lowest ID). For example, the UE may be configured with one trigger event configuration (e.g., per cell group). The trigger event configuration may be named as event-trigger (or event-driven) configuration.

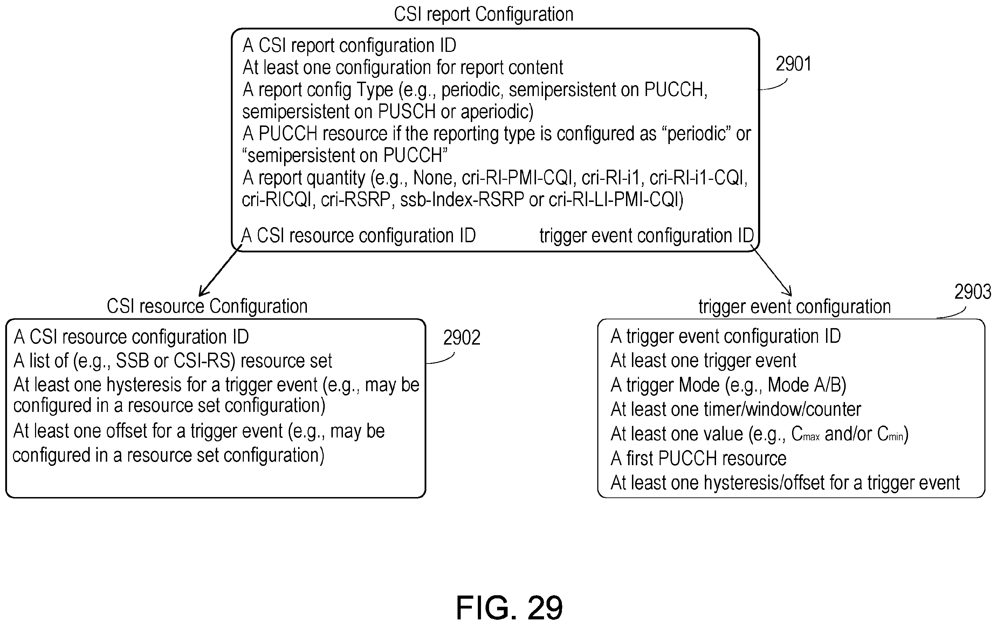

FIG. 29 illustrates a schematic diagram of CSI report configuration 2901 according to one embodiment of the present disclosure. A CSI report (or LTM CSI report) configuration (e.g., CSI report configuration 2901) supporting event triggered UL transmission may include at least one of following: a CSI report configuration ID; at least one CSI-Resource Configuration ID for at least one CSI resource configuration; at least one trigger event configuration ID for at least one event configuration; at least one configuration for report content, including at least one of the number of reported cells (e.g., L, where L is a positive integer), the number of reported reference signal per cell (e.g., M, where M is a positive integer), and an indication of whether the report content includes the report associated with current cell/beam (e.g., special Cell (SPCell)); and/or a report config Type (e.g., choose one type from {periodic, semipersistent on PUCCH, semipersistent on PUSCH, aperiodic}). For example, the UE may be configured with a PUCCH resource and/or a CSI-Report-periodicity-and-offset if the report config type is configured as "semipersistent on PUCCH" or "periodic". For another example, the UE may be configured with a CSI-Report-periodicity-and-offset if the report config type is configured as "semipersistent on PUSCH".

The CSI report (or LTM CSI report) configuration supporting event triggered UL transmission may further include a report quantity (e.g., choose one quantity from {None, cri-RI-PMI-CQI, cri-RI-i1, cri-RI-i1-CQI, cri-RI-CQI, cri-RSRP, ssb-Index-RSRP, cri-RI-LI-PMI-CQI}). For example, the UE may be configured with cri-RSRP or ssb-Index-RSRP. Alternatively, the UE may be configured with cri-RSRP or ssb-Index-RSRP if a trigger event configuration ID is configured.

A CSI-Resource Configuration (e.g., CSI-resource configuration 2902) may include at least one of following: a CSI-Resource Configuration ID; and/or a list of (e.g., SSB and/or CSI-RS) resource set, wherein the resource set may include at least one RS (e.g., SSB and/or CSI-RS) for candidate cell/beam. Alternatively, The CSI-Resource Configuration may further include at least one of the following: at least one hysteresis parameter for evaluation of a trigger event (e.g., the parameter may be configured in a resource set configuration); and/or at least one offset for evaluation of a trigger event (e.g., the parameter may be configured in a resource set configuration).

A trigger event configuration (e.g., trigger event configuration 2903) may include at least one of following: a trigger event configuration ID; at least one trigger event (e.g., trigger event list), for example, choose at least one from {Event-1, Event-2, Event-7a, Event-7b}, or choose at least one from {Event-LTM2, Event-LTM3, Event-LTM4, Event-LTM5}; at least one timer/window (e.g., first timer *T*₁ and/or second timer *T*₂); at least one value (e.g., first value *Cₘₐₓ* and/or second value *Cₘᵢₙ*); a first PUCCH resource (e.g., to request a resource for a second UL channel); and/or a trigger Mode, for example, choose one from {Mode A, Mode B} for a second UL channel, wherein the second UL channel is scheduling by gNB in Mode A, and the second UL channel is pre-configured in Mode B. Alternatively, the trigger mode may (also) be indicated to the UE by a CSI report configuration.

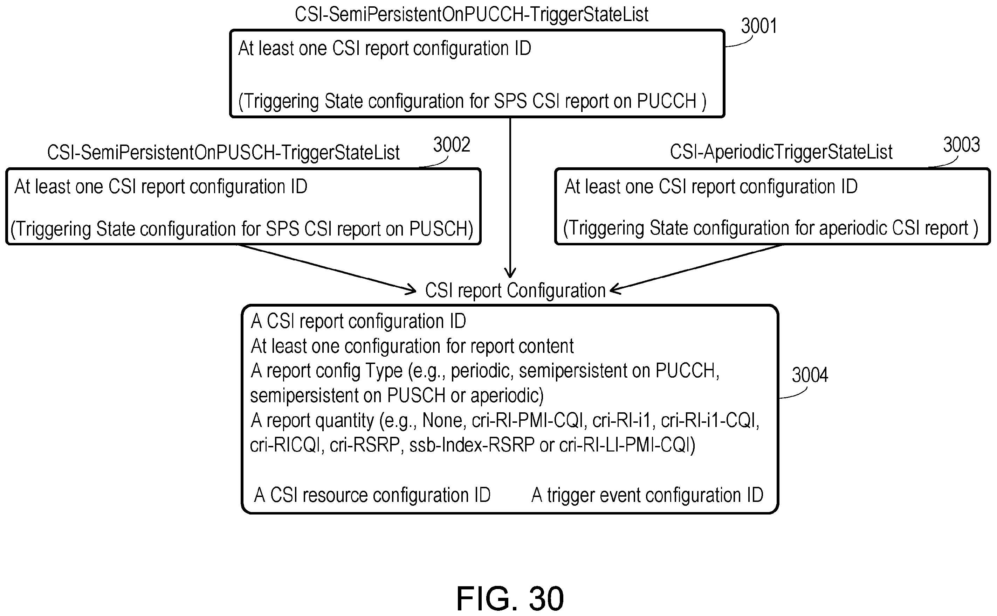

FIG. 30 illustrates a schematic diagram of CSI report configuration according to one embodiment of the present disclosure. A Triggering State configuration (e.g., *CSI-SemiPersistentOnPUCCH-TriggerStateList* 3001, *CSI-SemiPersistentOnPUSCH-TriggerStateList* 3002, or *CSI-AperiodicTriggerStateList* 3003) for CSI report on the second UL channel (e.g., PUSCH) may include: at least one CSI report configuration ID (e.g., ID of CSI report Configuration 3004) for at least one CSI report configuration. For example, each trigger state in *CSI-AperiodicTriggerStateList* may contain a list of associated CSI report Configuration and each of the associated CSI report Configuration may indicate the CSI-Resource Set IDs for channel and optionally for interference measurement.

For example, the UE may determine to transmit the second UL channel (e.g., PUSCH) according to a DCI, wherein the DCI triggers an aperiodic CSI trigger state, and the state may correspond to at least one CSI report configuration. The at least one CSI report configuration may be associated with UE-initiated/event-driven UL transmission (e.g., configured with a trigger event configuration ID). The DCI may be a UL grant DCI (e.g., DCI format 0_0, 0_1, or 0_2). The UE may be configured with trigger Mode A. The DCI may indicate an uplink shared channel (UL-SCH) not be transmitted on the PUSCH.

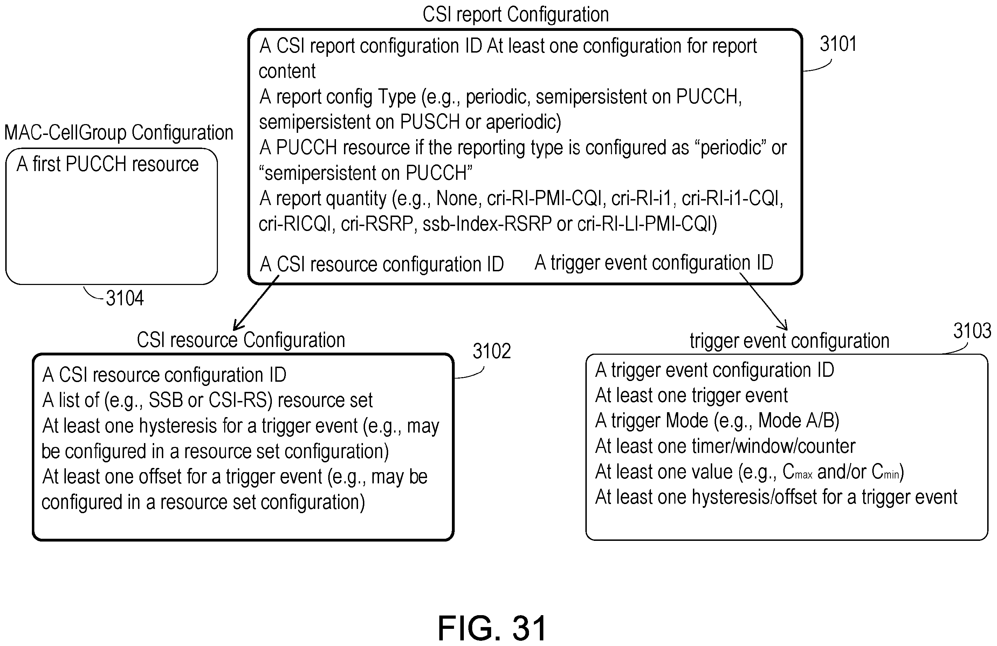

FIG. 31 illustrates a schematic diagram of CSI report configuration 3101 according to one embodiment of the present disclosure. A CSI report (or LTM CSI report) configuration (e.g., CSI report configuration 3101) supporting event triggered UL transmission may include at least one of following: a CSI report configuration ID; at least one CSI-Resource Configuration ID for at least one CSI resource configuration; at least one trigger event configuration ID for at least one event configuration; at least one configuration for report content; and/or a report config Type (e.g., choose one type from {periodic, semipersistent on PUCCH, semipersistent on PUSCH, aperiodic}). The CSI report (or LTM CSI report) configuration supporting event triggered UL transmission may further include a report quantity (e.g., choose one quantity from {None, cri-RI-PMI-CQI, cri-RI-i1, cri-RI-i1-CQI, cri-RI-CQI, cri-RSRP, ssb-Index-RSRP, cri-RI-LI-PMI-CQI}).

A CSI-Resource Configuration (e.g., CSI-resource configuration 3102) may include at least one of following: a CSI-Resource Configuration ID; and/or a list of (e.g., SSB and/or CSI-RS) resource set, wherein the resource set may include at least one RS (e.g., SSB and/or CSI-RS) for candidate cell/beam. Alternatively, The CSI-Resource Configuration may further include at least one of the following: at least one hysteresis parameter for evaluation of a trigger event (e.g., the parameter may be configured in a resource set configuration); and/or at least one offset for evaluation of a trigger event (e.g., the parameter may be configured in a resource set configuration).

A trigger event configuration (e.g., trigger event configuration 3103) may include at least one of following: a trigger event configuration ID; at least one trigger event (e.g., trigger event list); at least one timer/window; at least one value (e.g., first value *Cₘₐₓ* and/or second value *Cₘᵢₙ*); and/or a trigger Mode, for example, choose one from {Mode A, Mode B} for a second UL channel, wherein the second UL channel is scheduling by gNB in Mode A, and the second UL channel is pre-configured in Mode B. Alternatively, the trigger mode may (also) be indicated to the UE by a CSI report configuration.

A first PUCCH resource may be indicated to the UE by other configuration (e.g., *MAC-CellGroup Configuration* 3104) or a trigger event configuration with an ID (e.g., lowest ID).

In one embodiment, at least one parameter (e.g., hysteresis#1, offset#1, *T*₁, or *Cₘₐₓ*) for a trigger event for triggering the first PUCCH may be configured by at least one of CSI report configuration, trigger event configuration, or CSI resource configuration.

In one embodiment, at least one parameter (e.g., hysteresis#2, offset#2, *T*₂, or *Cₘᵢₙ*) for a trigger event for triggering the event-driven UL transmission (e.g., first PUCCH and/or second UL channel) may be configured by at least one of CSI report configuration, trigger event configuration, or CSI resource configuration.

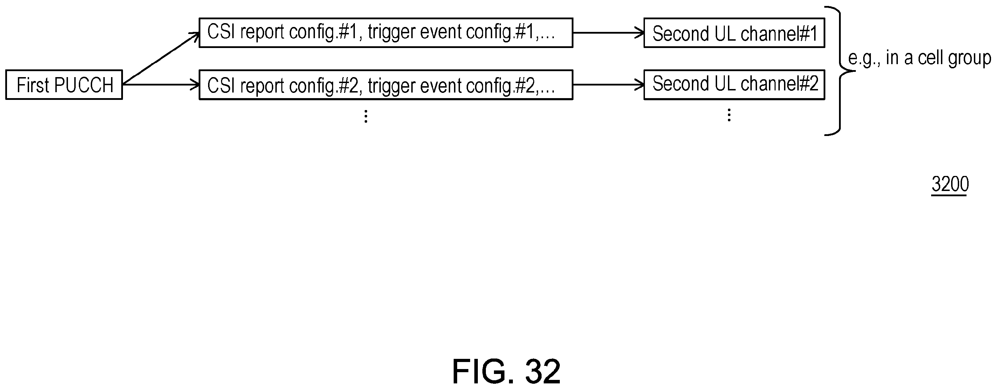

FIG. 32 illustrates a schematic diagram 3200 of first PUCCH and second UL channel (e.g., for CSI report) according to one embodiment of the present disclosure. A first PUCCH may be associated with one or more CSI report configurations (or one or more trigger event configurations). In addition, each of the CSI report configurations (or trigger event configurations) may be associated with different second UL channels, respectively. A resource for the first PUCCH may be indicated by an ID (e.g., scheduling request ID, *schedulingRequestID),* wherein the ID may be indicated by a configuration (e.g., CSI report configuration). In this case, each of the CSI report configurations may be configured with a same ID for the first PUCCH. The first PUCCH (or the CSI report) may include at least one of the following information: indication to request a resource of second UL channel; at least one cell ID; at least one configuration (e.g., trigger event configuration, CSI report configuration, or LTM CSI report configuration) ID; at least one RS ID, at least one RSRP (e.g., L1-RSRP); at least one differential RSRP (e.g., L1-RSRP); and/or at least one event ID. In one example, the CSI report configuration may include at least one event type or event ID. In one example, a configuration ID -in the first PUCCH may be applied to the transmission of the corresponding second UL channel (e.g., in a cell group). For example, CSI report configuration#1 or trigger event configuration#1 may be applied to the transmission of second UL channel#1, and CSI report configuration#2 or trigger event configuration#2 may be applied to the transmission of second UL channel#2.

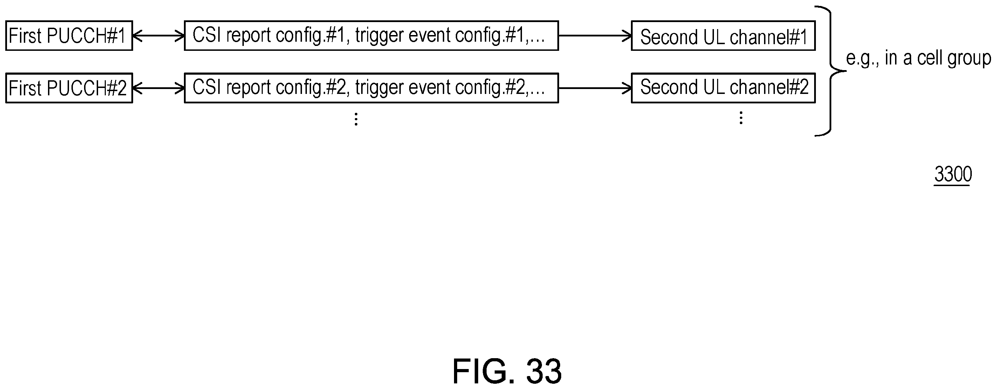

FIG. 33 illustrates a schematic diagram 3300 of first PUCCH and second UL channel according to one embodiment of the present disclosure. Different first PUCCHs may be associated with different CSI report configurations (or different trigger event configurations), respectively. In addition, each of the CSI report configurations (or trigger event configurations) may be associated with different second UL channels, respectively. A resource for a first PUCCH may be indicated by an ID (e.g., scheduling request ID, *schedulingRequestID),* wherein the ID may be indicated by a configuration (e.g., CSI report configuration). For example, a configuration (such as CSI report configuration#1 or trigger event configuration#1) may indicate first PUCCH#1, another configuration (such as CSI report configuration#2 or trigger event configuration#2) may indicate first PUCCH#2. Each configuration may be applied to the transmission of the corresponding second UL channel (e.g., in a cell group). For example, CSI report configuration#1 or trigger event configuration#1 may be applied to the transmission of second UL channel#1, and CSI report configuration#2 or trigger event configuration#2 may be applied to the transmission of second UL channel#2.

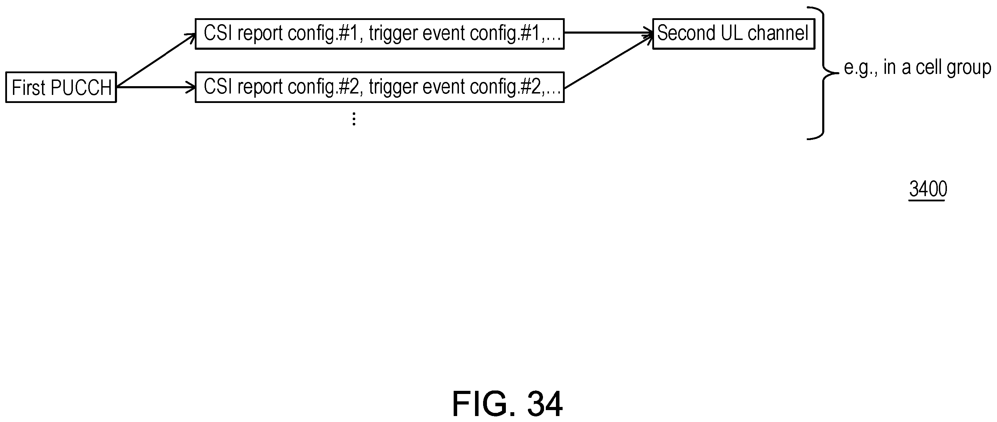

FIG. 34 illustrates a schematic diagram 3400 of first PUCCH and second UL channel (e.g., for CSI report) according to one embodiment of the present disclosure. A first PUCCH may be associated with one or more CSI report configurations (or one or more trigger event configurations). In addition, each of the CSI report configurations (or trigger event configurations) may be associated with a same second UL channels. In one example, CSI report configurations (or trigger event configurations) illustrated in the FIG. 34 may be in a same cell group. A resource for the first PUCCH may be indicated by an ID (e.g., scheduling request ID, *schedulingRequestID),* wherein the ID may be indicated by a configuration (e.g., CSI report configuration). In this case, each of the CSI report configurations may be configured with a same ID for the first PUCCH. The first PUCCH (or the CSI report) may include at least one of the following information: indication to request a resource of second UL channel; at least one cell ID; at least one configuration (e.g., trigger event configuration, CSI report configuration, or LTM CSI report configuration) ID; at least one RS ID, at least one RSRP (e.g., L1-RSRP); at least one differential RSRP (e.g., L1-RSRP); and/or at least one event ID. For example, the CSI report configuration may include at least one event type or at least one event ID. One or more configurations associated with the first PUCCH may be applied to the transmission of a second UL channel (e.g., in a cell group). For example, CSI report configuration#1, trigger event configuration#1, CSI report configuration#2, and/or trigger event configuration#2 may be applied to the transmission of the same second UL channel.

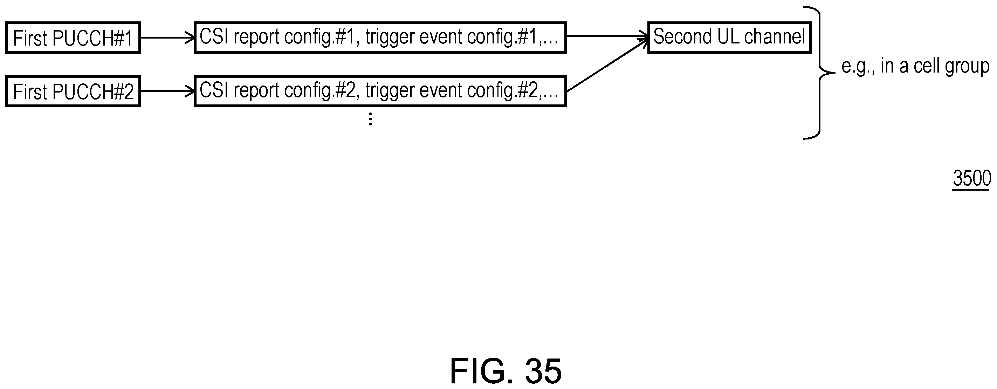

FIG. 35 illustrates a schematic diagram 3500 of first PUCCH and second UL channel (e.g., for CSI report) according to one embodiment of the present disclosure. Different first PUCCHs may be associated with different CSI report configurations (or different trigger event configurations), respectively. In addition, each of the CSI report configurations (or trigger event configurations) may be associated with a same second UL channels. A resource for a first PUCCH may be indicated by an ID (e.g., scheduling request ID, *schedulingRequestID),* wherein the ID may be indicated by a configuration (e.g., CSI report configuration). For example, a configuration (such as CSI report configuration#1 or trigger event configuration#1) may indicate first PUCCH#1, another configuration (such as CSI report configuration#2 or trigger event configuration#2) may indicate first PUCCH#2. One or more configurations respectively associated with one or more first PUCCHs may be applied to the transmission of a second UL channel (e.g., in a cell group). For example, CSI report configuration#1, trigger event configuration#1, CSI report configuration#2, and/or trigger event configuration#2 may be applied to the transmission of the same second UL channel.

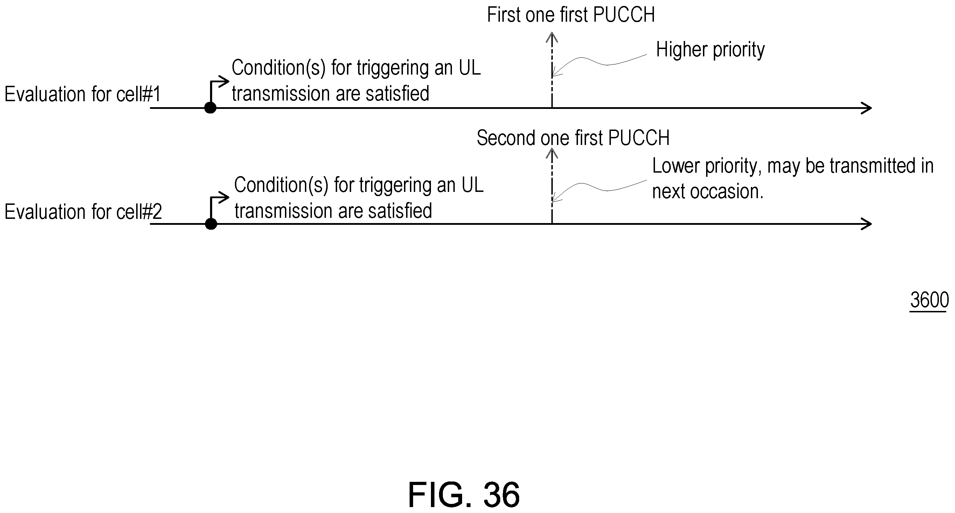

FIG. 36 illustrates a schematic diagram 3600 of collision handling of first PUCCHs corresponding to different configurations according to one embodiment of the present disclosure. A UE may receive multiple CSI report configurations, wherein each CSI report configuration may indicate a corresponding event type. When multiple events/configurations all satisfy the conditions (or event types) for UE-initiated/event-driven UL reporting, the UE may prioritize one event/configuration and transmit the corresponding first PUCCH (or information in the first PUCCH) based on the following information: a cell index/ID; a configuration index/ID; and/or an event index/ID (or event type). For example, event triggered for the primary cell (PCell) or the cell with smaller ID may has higher priority than other cell(s). For example, a smaller configuration/event ID or a pre-defined event ID/type may has higher priority. As shown in FIG. 36, the priority of the first PUCCH corresponding to cell#1 may be higher than the priority of the first PUCCH corresponding to cell#2. The first PUCCH corresponding to cell#1 may be the same as the first PUCCH corresponding to cell#2 if one first PUCCH is configured for multiple CSI report configurations (e.g., configurations for event-driven UL transmission).

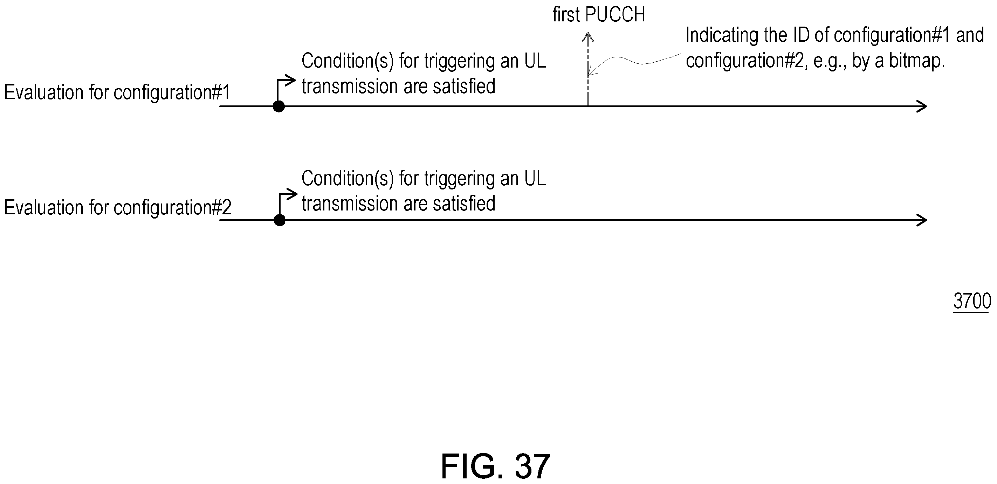

FIG. 37 illustrates a schematic diagram 3700 of collision handling of first PUCCHs corresponding to different configurations according to one embodiment of the present disclosure. A UE may receive multiple CSI report configurations, wherein each CSI report configuration may indicate a corresponding event type. When multiple events/configurations all satisfy the conditions (or event types) for UE-initiate/event-driven UL reporting, the UE may transmit information associated with the multiple events/configurations via a first PUCCH. For example, the first PUCCH may include information associated with configuration#1 (e.g., ID of configuration#1) and configuration#2 (e.g., ID of configuration#2).

In one embodiment, when a UE is configured with trigger mode B and the report configuration type is configured to semi-persistent on PUSCH by, for example, a CSI report configuration, the second UL channel may be a CG-PUSCH (or semi-persistent PUSCH). The UE may receive a higher layer configuration (or higher layer signal) from the network and determine the PUSCH resource according to the higher layer configuration (e.g., *ConfiguredGrantConfig*). A trigger event configuration or a CSI report configuration may be associated with the higher layer configuration. A trigger event configuration or a CSI report configuration may indicate an ID of the higher layer configuration. For other example, the higher layer configuration may indicate an ID of the trigger event configuration or an ID of the CSI report configuration. The higher layer configuration may provide at least one of following information for determining the PUSCH resource: a time domain resource allocation; a frequency domain resource allocation; a modulation order; a target code rate and/or a transport block (TB) size; a periodicity of the PUSCH; and/or a time domain offset of the PUSCH.

If the second UL channel is a PUSCH (e.g., configured by the gNB) such as a CG-PUSCH, the higher layer configuration may configure the following information to the UE: an ID of the higher layer configuration (e.g., *ConfiguredGrantConfig*); at least one CSI report configuration ID; a time domain resource allocation; a frequency domain resource allocation; a modulation order, target code rate, and/or TB size; a periodicity of the PUSCH; and/or a time domain offset of the PUSCH.

In one embodiment, the UE may determine the payload size (e.g., the number of bits) and the resource (e.g., time/frequency resource and/or periodicity) for the second UL channel according to a DCI scheduling the second UL channel (e.g., trigger mode A). For example, the DCI may indicate at least one of following for determining the payload size: a trigger event configuration ID or a CSI report configuration ID; a trigger event ID; and/or a cell ID. In one embodiment, the UE may determine the payload size and the resource for the second UL channel based on a trigger event configuration (or CSI report configuration) satisfying the condition of transmitting the first PUCCH (e.g., trigger mode B). For example, assume that one configuration (e.g., trigger event configuration or CSI report configuration) ID in the first PUCCH corresponds to one second UL channel. The UE may determine the payload size and the resource for the second UL channel based on the configuration corresponding to the configuration ID.

In one embodiment, the UE may determine the payload size (e.g., the number of bits) for the second UL channel according to one or more trigger event configurations (e.g., all trigger event configurations configured to the UE). In other words, the UE may determine the payload size of the second UL channel according to a set of CSI report configurations associated with the first PUCCH or second UL channel. For example, the UE may determine the payload size as the maximum payload size among the configurations. For example, assume that one or more configurations (e.g., trigger event configurations or CSI report configurations) configured to the UE correspond to one second UL channel. The UE may determine that the maximum payload size among all configurations is the payload size for the second UL channel.

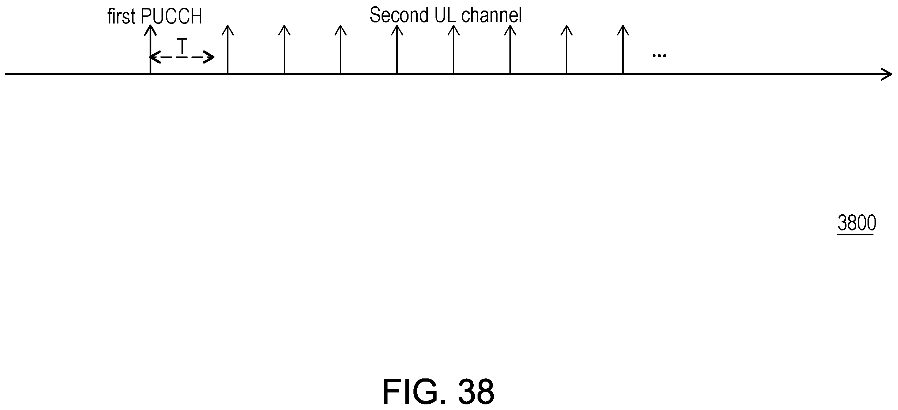

FIG. 38 illustrates a schematic diagram 3800 of scheduling of second UL channel according to one embodiment of the present disclosure. In one embodiment, the first transmission occasion for the second UL channel may not be earlier than a timer period (e.g., T ≥ 0) after the UE transmitting the first PUCCH (or after the end of the first PUCCH), wherein time period T may be the number of symbols determined by the UE according to a subcarrier spacing (e.g., of the second UL channel). In other words, the second UL channel may be the first one of available transmission occasions after timer period T from the end of the first PUCCH. The UE may be configured with trigger mode B.

Alternatively, assume that the UE is configured with trigger mode B and the reporting type on PUCCH is configured to periodic or semi-persistent by the configuration (e.g., CSI report configuration). If the second UL channel is a PUCCH, the UE may determine the resource of the PUCCH or the transmission periodicity according to the configuration (e.g., CSI report configuration).

In one embodiment, the first PUCCH and the second UL channel may be transmitted on the same serving cell. In one embodiment, the first PUCCH and the second UL channel may be transmitted on the different serving cells respectively. For example, if the second UL channel is a PUSCH, the UE may transmit the first PUCCH and the second UL channel via different serving cells respectively.

In one embodiment, the second UL channel may be transmitted on different serving cells in different transmission occasions. For example, if the second UL channel is a PUCCH and the UE is configured with a PUCCH switching secondary cell (PUCCH-sSCell) (e.g., for PUCCH cell switching), the UE may transmit the second UL channel on different serving cell in different transmission occasions.

In one embodiment, the UE may report the capability of the UE to the network to indicate whether the UE supports trigger mode A and/or trigger mode B for UE-initiated report or event-driven report.

In one embodiment, the UE may report the capability of the UE to the network to indicate whether the UE supports periodic PUCCH, semi-persistent scheduling (SPS) PUCCH, SPS PUSCH, and/or dynamic PUSCH as the second UL channel.

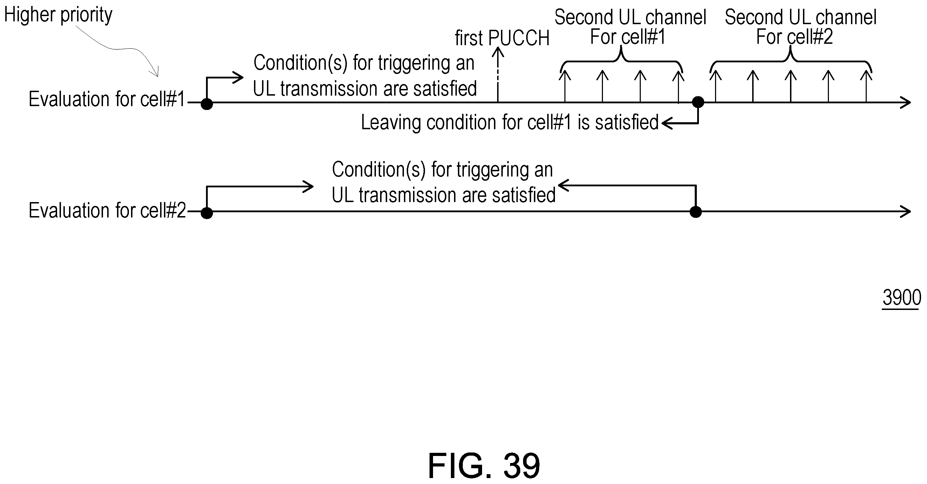

FIG. 39 illustrates a schematic diagram 3900 of collision handling of uplink control information (UCI) corresponding to different configurations in second UL channel according to one embodiment of the present disclosure. When multiple events correspond to different configurations (e.g., CSI report configurations) satisfy one or more conditions (or event types) for UE-initiated/event-driven UL reporting, the UE may determine at least one event or configuration for UL reporting (e.g., measurement reporting) via the second UL channel. The UE may select the at least one event or configuration according to a cell index, a configuration (e.g., CSI report configuration) index/ID, and/or an event ID/type. In one embodiment, the cell corresponds to one or more events triggered for PCell or the cell has a smaller cell ID may have higher priority than other cells. In one embodiment, a smaller configuration/event ID or a pre-defined event ID/type may has higher priority.

For example, the UE may determine that the priority of the second UL channel for cell#1 may be higher than the priority of the second UL channel for cell#2 since the ID of cell#1 is smaller than the ID of cell#2. Therefore, the UE may transmit the second UL channel for cell#1 first. After the leaving condition for cell#1 is satisfied, the UE may transmit the second UL channel for cell#2.

In one embodiment, one or more deprioritized events or configurations may be transmitted by the second UL channel after the leaving condition of one or more prioritized events or configurations are satisfied, if the one or more deprioritized events or configurations still satisfy one or more conditions of trigger event.

In one embodiment, the UE may be configured with at least one trigger event for UE-initiated/event-driven reporting. The trigger event may include: quality of the current beam (e.g., L1-RSRP) is worse than a certain threshold; quality of at least one new beam (e.g., L1-RSRP) becomes a threshold value (or offset) better than the current beam; quality of at least one new beam (e.g., L1-RSRP) becomes a threshold value better than the RS, wherein the RS is derived from the activated TCI state with the worst quality; and/or quality of at least one new beam (e.g., L1-RSRP) becomes a threshold value better than the RS, wherein the RS is derived from the activated TCI state with the best quality. In one embodiment, multiple trigger events may be associated with the same or different timer. For example, the UE may receive an indicator indicating a trigger event and may start or restart a timer (e.g., first timer or second timer) in response to the indicator, wherein the timer may include timer#1 and timer#2. If the UE determines that the indicator indicates that the L1-RSRP of a new beam becomes a threshold value better than the current beam, the UE may start or restart timer#1. If the UE determines that the indicator indicates that the L1-RSRP of the current beam becomes worse than a certain threshold, the UE may start or restart timer#2.

In one embodiment, the UE may be configured (e.g., by a CSI report configuration) with at least one event (e.g., quality of the current beam is worse than a certain threshold, or quality of at least one new beam becomes a threshold value better than the current beam) for a UE-initiated/event-driven reporting.

The UE may determine a payload size and/or a set of fields (e.g., CSI fields such as reporting quantity (the number of CSI report configurations associated with the UE-initiated/event driven report for a cell/cell group), the number of beams/cells in a report) for the reporting according to the configuration. The same set of fields may be used (e.g., transmitted by the second UL channel) if any of at least one event satisfies the report condition. For example, up to two events may be configured in the configuration (e.g., CSI report configuration).

In one embodiment, the UE may be configured with both event-1 (e.g., quality of the current beam is worse than a certain threshold) and event-2 (e.g., ; quality of at least one new beam becomes a threshold value (or offset) better than the current beam) for a UE-initiated/event-driven reporting. The UE may determine a payload size and/or a set of (e.g., CSI) field (e.g., reporting quantity or the number of beams/cells in a report) for the reporting. Same set of fields may be used if one of event-1 and event-2 satisfy the report condition.

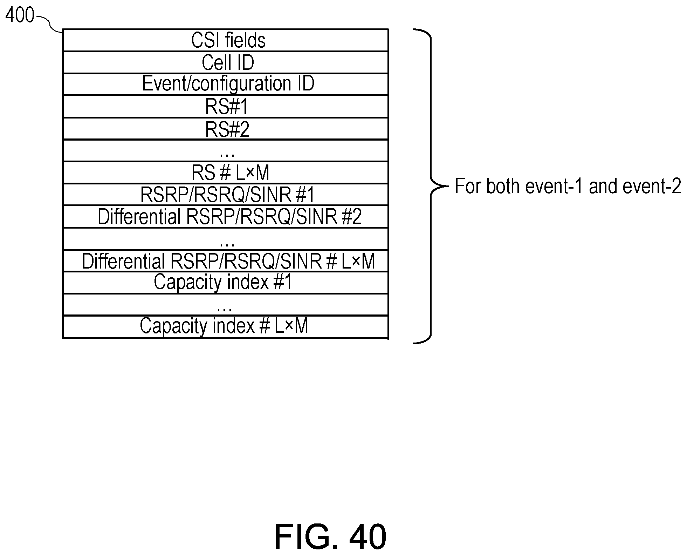

FIG. 40 illustrates a schematic diagram of CSI fields in CSI report 400 according to one embodiment of the present disclosure. The CSI fields in CSI report 400 may include: a cell ID; an event/configuration ID (e.g., CSI report configuration ID); one or more RS IDs (e.g., RS#1, RS#2, RS#L×M), wherein the RS ID may correspond to a reference signal satisfying an event; one or more measurement reports (e.g., (differential) RSRP (e.g., L1-RSRP), RSRQ, or SINR, such as RSRP/RSRQ/SINR#1, differential RSRP (e.g., L1-RSRP)/RSRQ/SINR#2, differential RSRP (e.g., L1-RSRP)/RSRQ/SINR#L×M)); and/or one or more capacity indices (e.g., capacity index#1, capacity index#L×M). RS may include a SS/PBCH block resource indicator (SSBRI) or a CSI-RS resource indicator (CRI). L is the number of reported cells, wherein L may be a fixed value (e.g., 1) or provided by higher layer configuration (e.g., CSI report configuration or LTM CSI report configuration). M is the number of reported RS & RSRP (e.g., L1-RSRP)/RSRQ/SINR/capacity index pairs per cell, wherein M may be a fixed value or configured by a higher layer configuration (e.g., CSI report configuration or LTM CSI report configuration).

In one embodiment, at most one event trigger configuration (or CSI report configuration) can be configured in a cell. For example, an event trigger configuration can be configured in a cell according to a UE capability reported by the UE.

In one embodiment, at most one event trigger configuration (or CSI report configuration) can be configured in a cell group. For example, an event trigger configuration can be configured in a cell group according to a UE capability reported by the UE.

In one embodiment, multiple event trigger configurations (or CSI report configurations) correspond to a single purpose may be configured (in a cell group). When a UE is configured with more than one event trigger configurations (e.g., for one or more serving cells respectively), the more than one event trigger configurations may correspond to the same purpose (e.g., for beam management). For example, multiple trigger configurations may be configured in a cell group according to a UE capability reported by the UE. The report of the UE capability may include a maximum number of cells which can be configured in the same time period.

In one embodiment, multiple event trigger configurations (or CSI report configurations) respectively correspond to multiple purposes may be configured (in a cell group). When a UE is configured with multiple event trigger configurations (e.g., two event trigger configurations) for multiple serving cells respectively, the multiple event trigger configurations may correspond to different purposes (e.g., for beam management and LTM, respectively). For example, multiple trigger configurations may be configured in a cell group according to a UE capability reported by the UE.

In one embodiment, multiple event trigger configurations can be configured (in a cell). For example, multiple event trigger configurations can be configured in a cell according to a UE capability reported by the UE.

In one embodiment, multiple event trigger configurations respectively correspond to multiple purposes may be configured (in a cell). When a UE is configured with multiple event trigger configurations (e.g., two event trigger configurations) for a serving cell, the multiple event trigger configurations may correspond to different purposes (e.g., for beam management and LTM, respectively). For example, multiple event trigger configurations respectively correspond to multiple purposes may be configured in a cell according to a UE capability reported by the UE.

In one embodiment, a single trigger event may be configured in a configuration (e.g., CSI report configuration). For example, a single trigger event may be configured in a configuration according to a UE capability reported by the UE.

In one embodiment, multiple trigger events may be configured in a configuration (e.g., CSI report configuration). For example, multiple trigger events may be configured in a configuration according to a UE capability reported by the UE.

In one embodiment, the UE may report a capability on whether to support an event trigger configuration type (or event type, CSI report configuration type) and one or more corresponding values (e.g., in the case where one configuration type is configured) for UE-initiated/event-driven report. For example, the parameters of reporting the capability for a first event trigger configuration type (e.g., beam management) may include: a maximum number of candidate beams in a serving cell. For example, the parameters of reporting the capability for a second event trigger configuration type (e.g., LTM) may include: a maximum number of candidate cells; and/or a maximum number of beams in a candidate cell.

In one embodiment, the UE may report a capability on whether to support jointly different event trigger configuration types (or multiple event types, jointly different CSI report configuration types) and one or more corresponding values (e.g., in the case where multiple configuration types are configured) for UE-initiated/event-driven report. For example, the parameters of reporting the capability for a first event trigger configuration type (e.g., beam management) may include: a maximum number of candidate beams. For example, the parameters of reporting the capability for a second event trigger configuration type (e.g., LTM) may include: a maximum number of candidate cells; and/or a maximum number of beams in a candidate cell.

In one embodiment, the UE may report a capability on whether to support multiple event trigger configurations (or multiple event types, multiple CSI report configurations) of the same configuration type and the corresponding values (e.g., in the case where multiple configuration types are configured). For example, the parameters of reporting the capability for a first event trigger configuration type (e.g., beam management) may include: a maximum number of configurations/cells can be supported; and/or a maximum number of candidate beams in a configuration. For example, the parameters of reporting the capability for a second event trigger configuration type (e.g., LTM) may include: a maximum number of candidate cells; and/or a maximum number of beams in a candidate cell. For a second event trigger configuration type (e.g., LTM): a maximum number of configurations/cells can be supported; a maximum number of candidate cells in a configuration; and/or a maximum number of beams in a candidate cells in a configuration.

In one embodiment, when the first PUCCH and a PUSCH are collided in the same time period: the UE may drop the first PUCCH; and/or the UE may transmit a MAC-CE via the PUSCH. The MAC-CE may be used to request a resource for a second UL channel for the UL transmission. The MAC-CE may include at least one of following: a cell ID; a configuration ID; and/or at least one event ID.

In one embodiment, when the second UL channel carrying CSI corresponds to a trigger event, and if the second UL channel and a PUCCH carrying a second UCI collide in the same time period: the UE may transmit the CSI and the second UCI (e.g., HARQ ACK or CSI including at least one of RSRP (e.g., L1-RSRP), RSRQ, or SINR) on the second UL channel; the UE may transmit the CSI on the second UL channel and drop the PUCCH carrying the second UCI (e.g., including at least one of rank indicator (RI), channel quality indicator (CQI), precoding matrix indicator (PMI) or including at least one of RSRP (e.g., L1-RSRP), RSRQ, or SINR); the UE may transmit the PUCCH carrying the second UCI (e.g., scheduling request (SR) or HARQ ACK) and drop the second UL channel; and/or the UE may transmit a channel with higher priority index if the second UL channel and the PUCCH are corresponding to different priority indices.

In one embodiment, when the second UL channel carrying CSI corresponds to a trigger event, and if the second UL channel and a PUSCH collide in the same time period: the UE may multiplex CSI in the PUSCH and drop the second UL channel, wherein an indicator may be multiplexed in the PUSCH with the UL signal, wherein the indicator may indicate whether the UL signal is multiplexed in the PUSCH; the UE may transmit the second UL channel and drop the PUSCH; the UE may transmit the PUSCH and drop the second UL channel; and/or the UE may transmit one of PUSCH and second UL channel which with higher priority index if the PUSCH and the second UL channel are corresponding to different priority indices.

In one embodiment, the UE may indicate beam failure of a serving cell by the second UL channel for link recovery. For example, the UE may indicate at least one of following information: a cell ID of the serving cell; a first pre-determined value (e.g., all zeros) for the quality (e.g. RSRP (e.g., L1-RSRP), RSRQ, or SINR) of current/serving beam of the serving cell; an identity of a reference signal (e.g., SSBRI or CRI) of the serving cell, wherein the reference signal may also be one of RS configured in *candidateBeamRSList* for link recovery; and/or a second predetermined value (e.g., all ones) for the quality (e.g. RSRP (e.g., L1-RSRP), RSRQ or SINR) of the reference signal. For example, an indication of beam failure for link recovery may has higher priority than other trigger events. One trigger event configuration may be configured for the UE in a cell group.

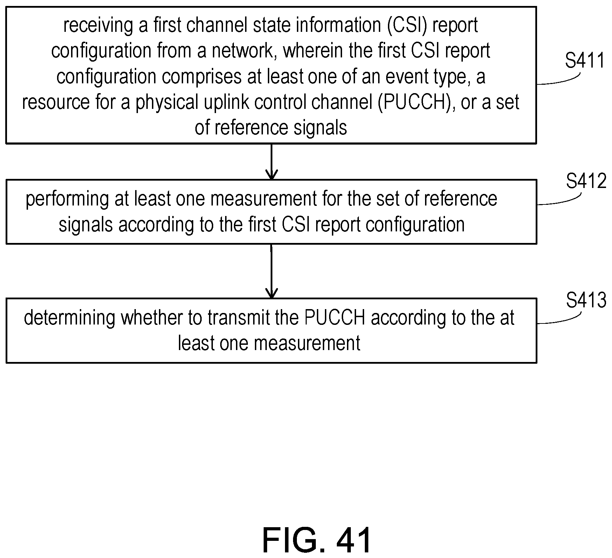

FIG. 41 illustrates a flowchart of a method of communication device handling UL transmission according to one embodiment of the present disclosure, wherein the method may be suitable for a UE or a base station. In step S411, receiving a first channel state information (CSI) report configuration from a network, wherein the first CSI report configuration comprises at least one of an event type, a resource for a physical uplink control channel (PUCCH), or a set of reference signals. In step S412, performing at least one measurement for the set of reference signals according to the first CSI report configuration. In step S413, determining whether to transmit the PUCCH according to the at least one measurement.

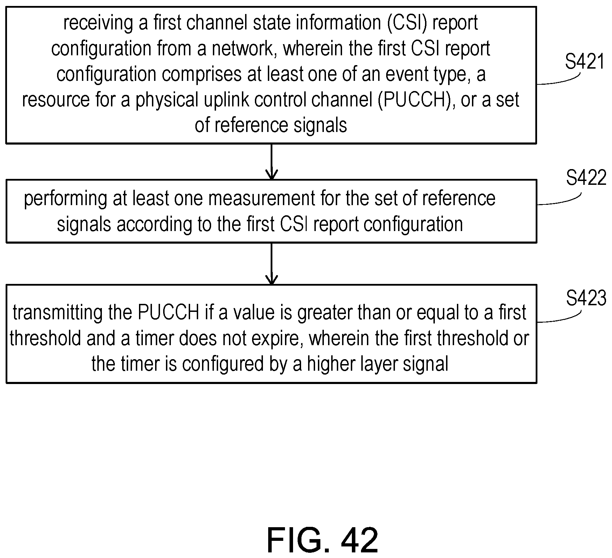

FIG. 42 illustrates a flowchart of a method of communication device handling UL transmission according to one embodiment of the present disclosure, wherein the method may be suitable for a UE or a base station. In step S421, receiving a first channel state information (CSI) report configuration from a network, wherein the first CSI report configuration comprises at least one of an event type, a resource for a physical uplink control channel (PUCCH), or a set of reference signals. In step S422, performing at least one measurement for the set of reference signals according to the first CSI report configuration. In step S423, transmitting the PUCCH if a value is greater than or equal to a first threshold and a timer does not expire (e.g., within a time period), wherein the first threshold or the timer is configured by a higher layer signal.

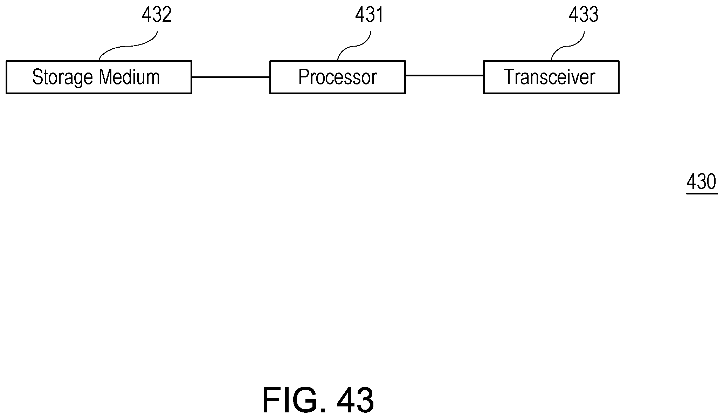

FIG. 43 illustrates a schematic diagram of a communication device according to one embodiment of the present disclosure, wherein the communication device may be implemented as a UE or a base station (e.g., network or node) as mentioned above. The communication device 430 may include a processor 431, a storage medium 432, and a transceiver 433. The processor 431 is coupled to the storage medium 432 and the transceiver 433. The processor 431 may be configured to at least to implement the methods as described in figures 1-42 as well as its exemplary embodiment and alterative variations.

The processor 431 could be implemented by using programmable units such as a microprocessor, a micro-controller, a digital signal processor (DSP), a field programmable gate array (FPGA), etc. The functions of the processor 431 may also be implemented with separate electronic devices or ICs. It should be noted that the functions of processor 431 may be implemented with either hardware or software.

The storage medium 432 may be, for example, any type of fixed or removable random access memory (RAM), a read-only memory (ROM), a flash memory, a hard disc drive (HDD), a solid state drive (SSD) or similar element, or a combination thereof, configured to record a plurality of modules or various applications executable by the processor 431.

The transceiver 433 may be configured to transmit and receive signals respectively in the radio frequency. The transceiver 433 may also perform operations such as low noise amplifying, impedance matching, frequency mixing, up or down frequency conversion, filtering, amplifying, and so forth. The transceiver 433 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 433 may include an antenna array which may include one or more antennas to transmit and receive omnidirectional antenna beams or directional antenna beams.

In this disclosure, the first PUCCH is not limited a PUCCH. For example, the first PUCCH may be a sounding reference signal (SRS) or a physical random-access channel (PRACH).

In this disclosure, a serving cell may be a PCell or a primary secondary cell (PSCell), but is not limited thereto.

In this disclosure, the term of "SS/PBCH" may be replaced by "SSB", and vice versa.

In this disclosure, "set a first timer to *T*₁" denotes the UE may start or restart the first timer and the first timer is configured to *T*₁. Same concept may be applied to other timers.

In this disclosure, the term "A/B" denotes "A and/or B".

In this disclosure, combination of embodiments should not be precluded.

Based on the above, the disclosed UE may determine whether to perform UL transmission based on the CSI report configurations. The UE may determine the number of triggered events based on a timer and a counter and initiate beam reporting procedure according the number of triggered events. Given that UE has better and more-timely knowledge of beam quality changes, UE-initiated beam reporting procedure or event-driven beam reporting performed by the UE can lead to more timely beam reports yet with reduced reporting overhead. Under such a procedure, if the UE determines that, for example, the current beam's quality becomes poor, the UE may trigger beam reporting without the network needing to configure or trigger frequent reporting.

## Claims

1. A method for communication device handling uplink, UL, transmission, comprising:
receiving a first channel state information, CSI, report configuration from a network, wherein the first CSI report configuration comprises at least one of an event type, a resource for a physical uplink control channel, PUCCH, or a set of reference signals;
performing at least one measurement for the set of reference signals according to the first CSI report configuration; and
transmitting the PUCCH if a value is greater than or equal to a first threshold and a timer does not expire, wherein the first threshold or the timer is configured by a higher layer signal.

2. The method according to claim 1, further comprising:
determining the value according to the at least one measurement.

3. The method according to claim 1, further comprising:
not transmitting the PUCCH if the value is less than the first threshold.

4. The method according to claim 1, further comprising:
if at least one layer 1 reference signal received power, L1-RSRP, of at least one reference signal is a second threshold greater than a L1-RSRP of a first reference signal, increasing the value, wherein
the event type is set to a first event;
the second threshold is configured by the higher layer signal; or
the first reference signal is a reference signal corresponding to an indicated transmission configuration indicator, TCI, state, or a synchronization signal block, SSB, quasi co-located with the reference signal corresponding to the indicated TCI state.

5. The method according to claim 1, further comprising:
if a layer 1 reference signal received power, L1-RSRP, of a second reference signal is less than a third threshold, increasing the value, wherein
the event type is set to a second event;
the third threshold is configured by the higher layer signal; or
the second reference signal is a reference signal corresponding to an indicated transmission configuration indicator, TCI, state, or a synchronization signal block, SSB, quasi co-located with the reference signal corresponding to the indicated TCI state.

6. The method according to claim 1, further comprising:
setting the value to zero upon receiving a first indicator, wherein the first indicator indicates a first transmission configuration indicator, TCI, state, wherein the first indicator is used to update a second TCI state of a measured reference signal;
setting the value to zero upon receiving a second indicator, wherein the second indicator indicates an activation of at least one TCI state, wherein the second indicator is transmitted via a medium access control control element, MAC-CE;
setting the value to zero upon a timer expires; or
setting the value to zero after transmitting a UL channel.

7. The method according to claim 1, further comprising:
if a first timer is not starting and at least one layer 1 reference signal received power, L1-RSRP, of at least one reference signal is a second threshold greater than a L1-RSRP of a first reference signal, starting or restarting the first timer, wherein
the event type is set to a first event;
the first timer or the second threshold is configured by the higher layer signal; or
the first reference signal is a reference signal corresponding to an indicated transmission configuration indicator, TCI, state, or a synchronization signal block, SSB, quasi co-located with the reference signal corresponding to the indicated TCI state.

8. The method according to claim 1, further comprising:
if a second timer is not starting and a layer 1 reference signal received power, L1-RSRP, of a second reference signal is less than a third threshold, starting or restarting the second timer, wherein
the event type is set to a second event;
the second timer or the third threshold is configured by the higher layer signal; or
the second reference signal is a reference signal corresponding to an indicated transmission configuration indicator, TCI, state, or a synchronization signal block, SSB, quasi co-located with the reference signal corresponding to the indicated TCI state.

9. The method according to claim 1, wherein
the PUCCH is associated with at least one second CSI report configuration, and the at least one second CSI report configuration comprises at least one event type.

10. The method according to claim 1, further comprising:
transmitting a UL channel, wherein the UL channel comprises a measurement report to the network, wherein
the UL channel is a first one of available transmission occasions after a time period from an end of the PUCCH;
the UL channel and the PUCCH are transmitted via different serving cells respectively;
the UL channel is associated with at least one second CSI report configuration; or
the at least one second CSI report configuration comprises at least one event type.

11. The method according to claim 10, wherein
the UL channel is a physical uplink shared channel, PUSCH, indicated by a downlink control information, DCI, if a report transmission mode is configured to a first mode, and
the UL channel is a configured grant PUSCH, CG-PUSCH, if the report transmission mode is configured to a second mode, wherein
the CG-PUSCH is configured by a second higher layer signal and the second higher layer signal comprises:
an identity of a higher layer configuration;
a time domain resource allocation;
a frequency domain resource allocation;
a modulation order, target code rate, or transport block size;
a periodicity of the CG-PUSCH; or
a time domain offset of the CG-PUSCH.

12. The method according to claim 10, wherein the UL channel comprises a channel state information, CSI, report, wherein
the CSI report comprises at least one of a CSI report configuration identity, ID, a cell ID, an event ID, a plurality of reference signal IDs, a reference signal received power, RSRP, or at least one differential RSRP, wherein
at least one of the plurality of reference signal IDs corresponds to at least one reference signal, wherein the at least one reference signal satisfies an event, wherein
a payload size of the UL channel is determined according to a set of CSI report configurations associated with the PUCCH or the UL channel.

13. The method according to claim 1, further comprising:
receiving a plurality of CSI report configurations comprising the first CSI report configuration; and
transmitting the PUCCH when the plurality of CSI report configurations satisfy a plurality of event types respectively.

14. The method according to claim 1, further comprising:
transmitting information to the network, wherein the information comprises at least one of the following:
whether to support a CSI configuration associated with a user equipment, UE, initiate report or an event-driven report;
a number of CSI report configurations associated with the UE-initiated report or the event-driven report;
whether to support multiple event types for the UE-initiated report or the event-driven report;
whether to support a first mode for the UE-initiated report or the event-driven report, wherein a UL channel in the first mode is configured by a downlink control information, DCI; or
whether to support a second mode for the UE-initiated report or the event-driven report, wherein the UL channel in the second mode is configured by a second higher layer signal.

15. A user equipment (430), comprising:
a transceiver (433); and
a processor (431), coupled to the transceiver (433), wherein the processor (431) is configured to:
receive a first channel state information, CSI, report configuration from a network, wherein the first CSI report configuration comprises at least one of an event type, a resource for a physical uplink control channel, PUCCH, or a set of reference signals;
perform at least one measurement for the set of reference signals according to the first CSI report configuration; and
transmitting the PUCCH if a value is greater than or equal to a first threshold and a timer does not expire, wherein the first threshold or the timer is configured by a higher layer signal.
